# EUROPEAN PATENT APPLICATION

(11) **EP 4 600 777 A1**
(43) Date of publication of application: **13.08.2025**
(21) Application number: 24848226.7
(22) Date of filing: 29.07.2024
(51) Int. Cl.: G06F 1/16

(54) **PROTECTIVE CASE ASSEMBLY AND ELECTRONIC APPARATUS**

(30) Priority: 31.07.2023 CN 202310960338; 11.09.2023 CN 202311172717
(71) Applicant: Huawei Technologies Co., Ltd., Shenzhen, Guangdong 518129 (CN)
(72) Inventor: LUO, Yang, Shenzhen, Guangdong 518129 (CN); LEI, Yu, Shenzhen, Guangdong 518129 (CN); ZHEN, Haitao, Shenzhen, Guangdong 518129 (CN); ZHU, Guangyao, Shenzhen, Guangdong 518129 (CN)
(74) Representative: Pfenning, Meinig & Partner mbB
(86) International application number: PCT/CN2024/108201
(87) International publication number: WO 2025/026271

(57) **Abstract**

This application provides a protective case accessory (2), including a keyboard assembly (42), a connection part (41), a first support part (31), and a second support part (33). The connection part (41) is fastened to the keyboard assembly (42) and electrically connected to the keyboard assembly (42). The first support part (31) is articulated to the second support part (33), and the second support part (33) is configured to form a detachable connection to the connection part (41). When an electronic device (5) is placed on the protective case accessory (2), the first support part (31) is in contact with a rear side (5a) of the electronic device (5), the second support part (33) rotates by a specific angle relative to the first support part (31) and forms an included angle with the rear side (5a) of the electronic device (5), the connection part (41) falls within the included angle, and the connection part (41) and the electronic device (5) form a circuit connection, where the rear side (5a) of the electronic device (5) is opposite to a display (51) of the electronic device (5). This application further provides an electronic apparatus, including an electronic device (5) and the protective case accessory (2). According to the solution in this application, the protective case accessory (2) can be connected to the electronic device (5) while it is ensured that the electronic device (5) is light and thin.

## Description

This application claims priorities to Chinese Patent Application No. 202310960338.0, filed with the China National Intellectual Property Administration on July 31, 2023 and entitled "PROTECTIVE CASE ACCESSORY AND ELECTRONIC APPARATUS", and to Chinese Patent Application No. 202311172717.X, filed with the China National Intellectual Property Administration on September 11, 2023 and entitled "PROTECTIVE CASE ACCESSORY AND ELECTRONIC APPARATUS", both of which are incorporated herein by reference in their entireties.

### TECHNICAL FIELD

This application relates to the field of electronic device accessory technologies, and in particular, to a protective case accessory and an electronic apparatus.

### BACKGROUND

Consumer electronic products such as mobile phones and tablet computers may match folio keyboards for use, so that input may be performed on the devices through keyboards like notebook computers. Currently, the device becomes increasingly ultra-light and ultra-thin, and the folio keyboard matching the device is connected to the device through a connector on a side of the bottom of the device. As the device becomes lighter and thinner, there is no sufficient space on the side of the bottom of the device for arranging the connector. Therefore, how to connect the folio keyboard to the device while ensuring that the device is light and thin becomes an urgent problem to be resolved.

### SUMMARY

Embodiments of this application provide a protective case accessory and an electronic apparatus. The protective case accessory is connected to an electronic device on the rear side of the electronic device, so that the protective case accessory can be connected to the electronic device while it is ensured that the device is light and thin.

According to a first aspect, an embodiment of this application provides a protective case accessory, configured to match an electronic device for use. The protective case accessory includes a keyboard assembly, a connection part, a first support part, and a second support part. The connection part is fastened to the keyboard assembly and electrically connected to the keyboard assembly. The first support part is articulated to the second support part, and the second support part is configured to form a detachable connection to the connection part. When the electronic device is placed on the protective case accessory, the first support part is in contact with a rear side of the electronic device, the second support part rotates by a specific angle relative to the first support part and forms an included angle with the rear side of the electronic device, the connection part falls within the included angle, and the connection part and the electronic device form a circuit connection, where the rear side of the electronic device is opposite to a display of the electronic device.

In this solution, when the electronic device is placed on the protective case accessory, the connection part that is in a circuit connection to the electronic device is located on the rear side of the electronic device. In this rear side connection design, a thickness of the electronic device does not need to be increased, thus helping implement lightness and thinness of the electronic device. Through the connection part, a circuit connection can be established between the protective case accessory and the electronic device, so that the electronic device supplies power to the protective case accessory, and/or the electronic device communicates with the protective case accessory. This solution provides a keyboard solution that has good adaptability to the electronic device, to enhance product competitiveness. When the electronic device is supported on the protective case accessory, the connection part may be hidden between the electronic device and the second support part, and the connection part is shielded by the electronic device, so that a user cannot see the connection part from a front side of the electronic device, thereby improving aesthetics and user experience.

In an implementation of the first aspect, a built-in battery and wireless communication module are disposed in the keyboard assembly, and the wireless communication module is configured to perform wireless communication with a wireless communication module in the electronic device. The connection part includes a first wireless coil, and the first wireless coil is electrically connected to the battery. When the electronic device is placed on the protective case accessory, the first wireless coil is coupled to the electronic device, and the battery is configured to receive electric energy input by the electronic device.

In this solution, the protective case accessory is coupled to the electronic device through the first wireless coil. For example, the first wireless coil is coupled to the wireless coil in the electronic device, so that the electronic device can perform wireless charging on the battery in the protective case accessory. The wireless communication module is disposed in the protective case accessory, so that the protective case accessory can perform wireless communication with the electronic device. This solution provides a protective case accessory that has good adaptability to the electronic device, to enhance product competitiveness.

In an implementation of the first aspect, the first wireless coil includes a conductor coil, a first flexible printed circuit board, and a nanocrystalline layer, the first flexible printed circuit board includes a first part and a second part, the first part is connected to the second part, the conductor coil, the first part, and the nanocrystalline layer are sequentially stacked, the conductor coil is electrically connected to the first part, and the second part is electrically connected to the keyboard assembly. The first wireless coil in this solution has a simple structure, good feasibility of mass production, and good adaptability to the electronic device.

In an implementation of the first aspect, the first wireless coil includes a conductor coil, a first flexible printed circuit board, and a nanocrystalline layer, the first flexible printed circuit board includes a first part and a second part, the first part is connected to the second part, the conductor coil, the nanocrystalline layer, and the first part are sequentially stacked, the conductor coil is electrically connected to the first part, and the second part is electrically connected to the keyboard assembly. The first wireless coil in this solution has a simple structure, good assembly performance, and good adaptability to the electronic device.

In an implementation of the first aspect, a thickness of the first wireless coil is 0.4 mm to 1.0 mm. In this solution, the first wireless coil is small in thickness, so that when the electronic device is positioned on the protective case accessory and the protective case accessory is closed, a thickness at a circuit connection point between the protective case accessory and the electronic device is reduced, thereby improving user experience.

In an implementation of the first aspect, the connection part includes a connector, and when the electronic device is placed on the protective case accessory, the connector and the electronic device form a circuit connection. In this solution, the protective case accessory is in a circuit connection to the electronic device through the connector. For example, the connector may be in electrical contact with the electronic device, so that the electronic device can supply power to the protective case accessory or communicate with the protective case accessory. This solution provides a protective case accessory that has good adaptability to the electronic device, to enhance product competitiveness.

In an implementation of the first aspect, the connector includes a printed circuit board, a second flexible printed circuit board, and a spring plate. The second flexible printed circuit board includes a third part and a fourth part, the third part is connected to the fourth part, the third part is electrically connected to the printed circuit board, and the fourth part is electrically connected to the keyboard assembly. The spring plate is welded to the printed circuit board, and the spring plate is configured to implement an electrical contact. This solution provides a specific structure of the connector, which has good adaptability to the electronic device and good feasibility of mass production.

In an implementation of the first aspect, the printed circuit board is provided with a mounting through hole, and the spring plate is mounted in the mounting through hole. This dip-type mounting manner has reliable performance and is conducive to reducing a thickness of the connector.

In an implementation of the first aspect, the spring plate includes a bottom plate, an elastic arm, and a contact, the elastic arm and the bottom plate form a bent structure, there is a gap between the elastic arm and the bottom plate, the contact is connected to a side that is of the elastic arm and that is opposite to the bottom plate, and the contact is configured to implement an electrical contact. This solution provides a specific structure of the connector, which has good adaptability to the electronic device and good feasibility of mass production.

In an implementation of the first aspect, when the spring plate is in a working state, a distance from a surface that is of the elastic arm and that is connected to the contact to a surface that is of the bottom plate and that is opposite to the elastic arm is 0.1 mm to 1.5 mm. In this solution, so that when the electronic device is positioned on the protective case accessory, a thickness at a circuit connection point between the protective case accessory and the electronic device is reduced, thereby improving user experience.

In an implementation of the first aspect, the connection part further includes a base and a cover part, and the cover part is connected to the base. One part of the first wireless coil is located between the cover part and the base, and the other part of the first wireless coil is located outside the cover part and the base. This solution provides an assembly structure of the connection part. The connection part has a reliable structure, good adaptability to the electronic device, and good feasibility of mass production.

In an implementation of the first aspect, a conductor coil, a first part of a first flexible printed circuit board, and a nanocrystalline layer of the first wireless coil are located between the cover part and the base, one part of a second part of the first flexible printed circuit board is located between the cover part and the base, and the other part of the second part is located outside the cover part and the base. This solution provides an assembly structure of the connection part. The connection part has a reliable structure, good adaptability to the electronic device, and good feasibility of mass production.

In an implementation of the first aspect, the base is provided with a first accommodation groove. The conductor coil, the first part of the first flexible printed circuit board, and the nanocrystalline layer of the first wireless coil are accommodated in the first accommodation groove, and the second part of the first flexible printed circuit board is located outside the first accommodation groove. This solution provides an assembly structure of the connection part. The connection part has a reliable structure, good adaptability to the electronic device, and good feasibility of mass production. In addition, a part of the first wireless coil is accommodated in the first accommodation groove, which helps reduce a stacking thickness of the connection part, reduce a thickness at the circuit connection point between the protective case accessory and the electronic device, and improve user experience.

In an implementation of the first aspect, the connection part further includes a cover plate, and the cover plate seals the first accommodation groove and is located between the base and the cover part. The cover plate is designed to package the first wireless coil, so as to ensure that the first wireless coil can work stably and reliably, and facilitate assembly of another component.

In an implementation of the first aspect, the base is provided with a second accommodation groove. The cover part includes a first cover part and a second cover part, the first cover part is mounted in the second accommodation groove, and the second cover part covers the first cover part and the base. The conductor coil, the first part of the first flexible printed circuit board, and the nanocrystalline layer of the first wireless coil are located between the second cover part and the base, and a part of the second part of the first flexible printed circuit board is located between the second cover part and the first cover part. This solution provides an assembly structure of the connection part. The connection part has a reliable structure, good adaptability to the electronic device, and good feasibility of mass production. In addition, at least a part of the first cover part is mounted in the second accommodation groove, which helps reduce a stacking thickness of the connection part, reduce a thickness at the circuit connection point between the protective case accessory and the electronic device, and improve user experience.

In an implementation of the first aspect, the connection part further includes a base and a cover part, and the cover part is connected to the base. One part of the connector is located between the cover part and the base, and the other part of the connector is located outside the cover part and the base. This solution provides an assembly structure of the connection part. The connection part has a reliable structure, good adaptability to the electronic device, and good feasibility of mass production.

In an implementation of the first aspect, the printed circuit board and the third part of the second flexible printed circuit board are located between the cover part and the base, one part of the fourth part of the second flexible printed circuit board is located between the cover part and the base, the other part of the fourth part is located outside the cover part and the base, an electrical contact part of the spring plate is exposed, and a part of the spring plate except the electrical contact part is located between the cover part and the base. This solution provides an assembly structure of the connection part. The connection part has a reliable structure, good adaptability to the electronic device, and good feasibility of mass production.

In an implementation of the first aspect, the base is provided with a first accommodation groove. The printed circuit board, the third part of the second flexible printed circuit board, and the spring plate are accommodated in the first accommodation groove, and the fourth part of the second flexible printed circuit board is located outside the first accommodation groove. This solution provides an assembly structure of the connection part. The connection part has a reliable structure, good adaptability to the electronic device, and good feasibility of mass production. In addition, a part of the connector is accommodated in the first accommodation groove, which helps reduce a stacking thickness of the connection part, reduce a thickness at the circuit connection point between the protective case accessory and the electronic device, and improve user experience.

In an implementation of the first aspect, the base is provided with a second accommodation groove. The cover part includes a first cover part and a second cover part, the first cover part is mounted in the second accommodation groove, and the second cover part covers the first cover part and the base. The printed circuit board and the third part of the second flexible printed circuit board are located between the second cover part and the base, one part of the fourth part of the second flexible printed circuit board is located between the second cover part and the first cover part, the other part of the fourth part is located outside the cover part and the base, and a part of the spring plate except an electrical contact part is located between the second cover part and the base. This solution provides an assembly structure of the connection part. The connection part has a reliable structure, good adaptability to the electronic device, and good feasibility of mass production. In addition, at least a part of the first cover part is mounted in the second accommodation groove, which helps reduce a stacking thickness of the connection part, reduce a thickness at the circuit connection point between the protective case accessory and the electronic device, and improve user experience.

In an implementation of the first aspect, the connection part further includes a magnet, and the magnet is located inside the base. The connection part is magnetic, so that the connection part magnetically attracts the electronic device to implement flexible mounting and removal of the protective case accessory and the electronic device, or the connection part magnetically attracts the second support part to implement a separate design of the protective case accessory.

In an implementation of the first aspect, the second support part is provided with an accommodation groove, and when the second support part is connected to the connection part, the connection part is accommodated in the accommodation groove. The accommodation groove is disposed on the second support part. When the connection part is accommodated in the accommodation groove, a thickness at the circuit connection point between the protective case accessory and the electronic device can be reduced, thereby improving user experience.

In an implementation of the first aspect, the second support part is intact, and when the connection part falls within the included angle formed between the second support part and the rear side of the electronic device, all regions of the connection part are shielded by the second support part. The second support part is designed to be intact, so that when the electronic device is positioned on the protective case accessory, the user cannot see the connection part from the rear side of the electronic device, thereby improving user experience.

In an implementation of the first aspect, the second support part is magnetic. The second support part is magnetic, so that the second support part magnetically attracts the connection part, thereby implementing a separable design of the protective case accessory.

In an implementation of the first aspect, the keyboard assembly includes a keyboard and a keyboard connection region, and the connection part, the keyboard connection region, and the keyboard are sequentially connected. The protective case accessory further includes a first connection structure, a first transmission part, and a second connection structure, the first connection structure is disposed on the first support part, the second connection structure is disposed on the second support part, one part of the first transmission part is disposed on the first support part and the other part is disposed on the second support part, and the first transmission part is connected between the first connection structure and the second connection structure. When the electronic device is placed on the protective case accessory, the keyboard connection region is located between the electronic device and the second support part, the connection part is detachably connected to the second support part, the connection part and the second connection structure form a circuit connection, and the first connection structure and the electronic device form a circuit connection.

This solution provides a specific architecture of the protective case accessory. For this architecture, a rear side connection design can be implemented, and a thickness of the electronic device does not need to be increased, thereby helping implement lightness and thinness of the electronic device. Through the connection part, a circuit connection can be established between the protective case accessory and the electronic device, so that the electronic device supplies power to the protective case accessory, and/or the electronic device communicates with the protective case accessory. The protective case accessory has good adaptability to the electronic device, so that product competitiveness can be improved. When the electronic device is supported on the protective case accessory, the connection part may be hidden between the electronic device and the second support part, and the connection part is shielded by the electronic device, so that the user cannot see the connection part from the front side of the electronic device, thereby improving aesthetics and user experience.

In an implementation of the first aspect, the first support part includes a first subpart and a second subpart, the first subpart and the second subpart are stacked and fastened, the second support part and the first subpart are located on a same side of the second subpart, the second support part is articulated to the first subpart, and the second support part is not connected to the second subpart. The first connection structure is disposed on the first subpart, and a part of the first transmission part is disposed on the first subpart. When the electronic device is placed on the protective case accessory, a side that is of the second subpart and that is opposite to the first subpart is in contact with the rear side of the electronic device, and the connection part is located between the second subpart and the second support part.

In this solution, the first support part includes the second subpart, so that a not high product requirement for the thickness of the electronic device and a thickness of a support component can be met. In addition, the first support part has better strength and rigidity, and supports the electronic device more stably and reliably.

In an implementation of the first aspect, a built-in battery and wireless communication module are disposed in the keyboard assembly, where the wireless communication module is configured to perform wireless communication with a wireless communication module in the electronic device. The connection part includes the contact, the second connection structure is a conductive contact point, and the first connection structure is a third wireless coil. When the electronic device is placed on the protective case accessory, the contact is in electrical contact with the conductive contact point, the third wireless coil is coupled to a wireless coil in the electronic device, and the battery is configured to receive electric energy input by the electronic device.

This solution provides a specific architecture of the protective case accessory, so that a rear side connection design can be implemented, and a thickness of the electronic device does not need to be increased, thereby helping implement lightness and thinness of the electronic device. Through the connection part, a circuit connection can be established between the protective case accessory and the electronic device, so that the electronic device charges the protective case accessory, and the electronic device communicates with the protective case accessory in a wireless manner. The protective case accessory has good adaptability to the electronic device, so that product competitiveness can be improved. When the electronic device is supported on the protective case accessory, the connection part may be hidden between the electronic device and the second support part, and the connection part is shielded by the electronic device, so that the user cannot see the connection part from the front side of the electronic device, thereby improving aesthetics and user experience.

In an implementation of the first aspect, the keyboard assembly includes a keyboard and a touchpad, and the connection part, the keyboard, and the touchpad are sequentially connected. When the electronic device is placed on the protective case accessory, the connection part is detachably connected to the rear side of the electronic device.

This solution provides a specific architecture of the protective case accessory. For this architecture, a rear side connection design can be implemented, and a thickness of the electronic device does not need to be increased, thereby helping implement lightness and thinness of the electronic device. Through the connection part, a circuit connection can be established between the protective case accessory and the electronic device, so that the electronic device supplies power to the protective case accessory, and/or the electronic device communicates with the protective case accessory. The protective case accessory has good adaptability to the electronic device, so that product competitiveness can be improved. When the electronic device is supported on the protective case accessory, the connection part may be hidden between the electronic device and the second support part, and the connection part is shielded by the electronic device, so that the user cannot see the connection part from the front side of the electronic device, thereby improving aesthetics and user experience.

In an implementation of the first aspect, when the electronic device is placed on the protective case accessory, the connection part is in contact with the rear side of the electronic device. The protective case accessory in this solution has a simple structure, and has good adaptability to the electronic device, so that product competitiveness can be improved.

In an implementation of the first aspect, the first support part includes a first subpart, a second subpart, a third connection structure, a second transmission part, and a fourth connection structure. The first subpart and the second subpart are stacked and fastened, the second support part and the first subpart are located on a same side of the second subpart, the second support part is articulated to the first subpart, and the second support part is not connected to the second subpart. The third connection structure, the second transmission part, and the fourth connection structure are all disposed on the second subpart, and the second transmission part is connected between the third connection structure and the fourth connection structure. When the electronic device is placed on the protective case accessory, a side that is of the second subpart and that is opposite to the first subpart is in contact with the rear side of the electronic device and is detachably connected to the electronic device, the connection part is located between the second support part and the second subpart and is detachably connected to the second subpart, the connection part and the fourth connection structure form a circuit connection, and the third connection structure and the electronic device form a circuit connection.

In this solution, the first support part includes the second subpart, so that a not high product requirement for the thickness of the electronic device and a thickness of a support component can be met. In addition, the first support part has better strength and rigidity, and supports the electronic device more stably and reliably.

In an implementation of the first aspect, a built-in battery and wireless communication module are disposed in the keyboard assembly, where the wireless communication module is configured to perform wireless communication with a wireless communication module in the electronic device. The connection part includes the contact, the fourth connection structure is a conductive contact point, and the third connection structure is a second wireless coil. When the electronic device is placed on the protective case accessory, the contact is in electrical contact with the conductive contact point, the second wireless coil is coupled to a wireless coil in the electronic device, and the battery is configured to receive electric energy input by the electronic device.

This solution provides a specific architecture of the protective case accessory, so that a rear side connection design can be implemented, and a thickness of the electronic device does not need to be increased, thereby helping implement lightness and thinness of the electronic device. Through the connection part, a circuit connection can be established between the protective case accessory and the electronic device, so that the electronic device charges the protective case accessory, and the electronic device communicates with the protective case accessory in a wireless manner. The protective case accessory has good adaptability to the electronic device, so that product competitiveness can be improved. When the electronic device is supported on the protective case accessory, the connection part may be hidden between the electronic device and the second support part, and the connection part is shielded by the electronic device, so that the user cannot see the connection part from the front side of the electronic device, thereby improving aesthetics and user experience.

In an implementation of the first aspect, the connection part and the keyboard assembly form a flexible connection. When the connection part is separated from the second support part, the connection part can be bent relative to the keyboard assembly, and is detachably connected to a rear side of the keyboard assembly, where the rear side of the keyboard assembly is opposite to a side that is of the keyboard assembly and on which a key is disposed.

In this solution, when a keyboard part is separated from the support component, the connection part may be turned over to the rear side of the keyboard assembly and is detachably connected to the keyboard assembly, so that the connection part may be fastened to the rear side of the keyboard assembly, and the keyboard part has a simple and regular appearance. When the user inputs on the keyboard assembly, the connection part may further raise a tilt angle of the keyboard assembly, to facilitate user input and improve user experience.

According to a second aspect, an embodiment of this application provides an electronic apparatus, including an electronic device and any one of the foregoing protective case accessories. The electronic device has a display and a rear side, and the display is opposite to the rear side of the electronic device. The electronic device is configured to be placed on the protective case accessory. The first support part is configured to be in contact with the rear side of the electronic device, and the connection part is configured to form a circuit connection to the electronic device.

### BRIEF DESCRIPTION OF DRAWINGS

FIG. 1 is a diagram of an assembly structure of an electronic apparatus from a perspective according to Embodiment 1 of this application;
FIG. 2 is a diagram of an assembly structure of an electronic apparatus from another perspective according to Embodiment 1 of this application;
FIG. 3 is a diagram of an exploded structure of the electronic apparatus in FIG. 2;
FIG. 4a is a diagram of an exploded structure of a second support part in FIG. 3;
FIG. 4b is a schematic front view of a structure of a second support part from a front view according to another embodiment;
FIG. 5 is a diagram of an assembly structure of a connection part in FIG. 3;
FIG. 6 is a diagram of an exploded structure of the connection part in FIG. 5;
FIG. 7 is a diagram of a structure of a base in FIG. 6;
FIG. 8 is a diagram of a structure of a first wireless coil in FIG. 6;
FIG. 9a is a diagram of an exploded structure of the first wireless coil in FIG. 8;
FIG. 9b is a diagram of a structure of a first wireless coil in another implementation;
FIG. 10 is a diagram of an assembly structure of a base and a first cover part in FIG. 6;
FIG. 11 is a diagram of an assembly structure of a base, a first cover part, and a first wireless coil in FIG. 6;
FIG. 12 is a diagram of an assembly structure of a base, a first cover part, a first wireless coil, and a cover plate in FIG. 6;
FIG. 13 is a diagram of an assembly structure of a connector according to Embodiment 2 of this application;
FIG. 14 is a diagram of an exploded structure of the connector in FIG. 13;
FIG. 15 is a diagram of a structure of a spring plate of the connector in FIG. 14;
FIG. 16 is a diagram of a structure of the spring plate in a direction A in FIG. 15;
FIG. 17 is a diagram of a structure of the spring plate in FIG. 15 from another perspective;
FIG. 18 is a diagram of a structure of a spring plate of another connector according to Embodiment 2 of this application;
FIG. 19 is a diagram of an assembly structure of the spring plate and a printed circuit board in FIG. 18;
FIG. 20 is a diagram of an assembly structure of a protective case accessory from a perspective according to Embodiment 1 of this application;
FIG. 21 is a diagram of an assembly structure of a protective case accessory from another perspective according to Embodiment 1 of this application;
FIG. 22 is a diagram of an exploded structure of the protective case accessory in FIG. 21;
FIG. 23 is a schematic top view of a structure of a second subpart according to an embodiment of this application;
FIG. 24 is a diagram of an assembly structure of an electronic apparatus according to Embodiment 4 of this application;
FIG. 25 is a schematic top view of an assembly structure of a first support part, a second support part, a third connection structure, a second transmission part, and a fourth connection structure of a protective case accessory in FIG. 24;
FIG. 26 is a diagram of an exploded structure of the first support part, the second support part, and the fourth connection structure in FIG. 25;
FIG. 27 is a diagram of an assembly structure of a protective case accessory according to Embodiment 5 of this application;
FIG. 28 is a diagram of an exploded structure of a support component of the protective case accessory in FIG. 27;
FIG. 29 is a diagram of a structure of a connection part that is flipped to the rear side of a keyboard assembly and detachably connected to the keyboard assembly from a perspective according to an embodiment of this application; and
FIG. 30 is a diagram of a structure of a connection part that is flipped to the rear side of a keyboard assembly and detachably connected to the keyboard assembly from another perspective according to an embodiment of this application.

### DESCRIPTION OF EMBODIMENTS

For ease of understanding, the following explains and describes related technical terms used in the embodiments of this application.

In descriptions of embodiments of this application, unless otherwise specified, "a plurality of" means two or more.

Terms such as "first" and "second" are used only for description purposes, and cannot be understood as an indication or implication of relative importance or an implicit indication of a quantity of indicated technical features. A feature limited by "first" or "second" may explicitly or implicitly include one or more features.

A "connection" should be understood in a broad sense. The "connection" may refer to a mechanical connection, may include a detachable connection and a nondetachable connection, and may include a direct connection and an indirect connection through an intermediate medium. The "connection" may also refer to a circuit connection in an electrical sense. The circuit connection may include an electrical connection, that is, a form in which different components in a line structure are connected through a physical line (for example, a conductor or a copper foil on a printed circuit board) that can transmit an electrical signal, and there is a physical contact between the electrically connected components. An electrically connected element may be nondetachable, for example, an electrical connection between a circuit board and an element welded on the circuit board. An electrically connected element may also be detachable, for example, an electrical contact between a contact and a contact point. The circuit connection may further include a coupling connection, that is, electrical coupling exists between different components, there is no physical medium between the components, and there is no physical contact between the components.

"Fastening" should also be understood in a broad sense. For example, "fastening" may be direct fastening or indirect fastening through an intermediate medium.

The direction terms mentioned in the embodiments of this application, for example, "up", "down", "front", "rear", "left", "right", "inside", "outside", "side", "rear side", and "front side", are merely directions of reference to the accompanying drawings. The direction terms are used to better and more clearly describe and understand embodiments of this application, rather than explicitly or implicitly indicating that an indicated apparatus or element needs to have a specific direction or be constructed and operated in a specific direction, and therefore cannot be construed as a limitation on embodiments of this application.

In the descriptions of embodiments of this application, unless otherwise specified, "and/or" is merely an association relationship for describing an associated object, and indicates that three relationships may exist. For example, A and/or B may represent the following three cases: Only A exists alone, both A and B exist, and only B exists.

The following describes embodiments of this application with reference to the accompanying drawings in embodiments of this application.

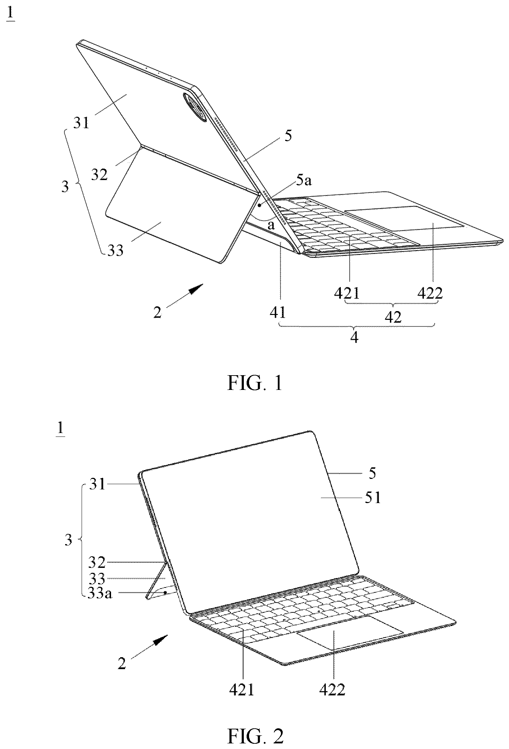

As shown in FIG. 1, FIG. 2, and FIG. 3, Embodiment 1 provides an electronic apparatus 1. The electronic apparatus 1 may include a protective case accessory 2 and an electronic device 5. The electronic device 5 may be supported on the protective case accessory 2, and form a circuit connection to the protective case accessory 2. In this case, a user may input on the electronic device 5 through a keyboard of the protective case accessory 2. The user may also remove the electronic device 5 from the protective case accessory 2.

As shown in FIG. 1 to FIG. 3, the electronic device 5 may have a panel-shaped appearance structure, and the electronic device 5 includes but is not limited to an electronic product like a tablet computer or a mobile phone. A display 51 may be disposed on a front side of the electronic device 5, and a rear side 5a of the electronic device 5 is disposed opposite to the display 51.

As shown in FIG. 1 to FIG. 3, the protective case accessory 2 may include a support component 3 and a keyboard part 4, and the support component 3 and the keyboard part 4 may be connected to or separated from each other, that is, the protective case accessory 2 has a split design. The support component 3 may position and support the electronic device 5, and the keyboard part 4 may be in a circuit connection to the electronic device 5. The following provides descriptions one by one.

As shown in FIG. 1 to FIG. 3, the support component 3 may include a first support part 31, a hinge 32, and a second support part 33. The hinge 32 is connected to the first support part 31 and the second support part 33. The first support part 31 is articulated to the second support part 33 are through the hinge 32. In another embodiment, the hinge 32 may not be disposed, and the first support part 31 is directly rotatably connected to the second support part 33.

As shown in FIG. 1, the first support part 31 may be basically in a flat-panel shape. The first support part 31 may be magnetic. For example, a built-in magnet may be disposed in the first support part 31, and the first support part 31 may magnetically attract a magnet in the electronic device 5; and/or a clamping structure, for example, a clamping lock or a clamping jaw, may be disposed on an edge of the first support part 31, and the first support part 31 may be clamped with the electronic device 5.

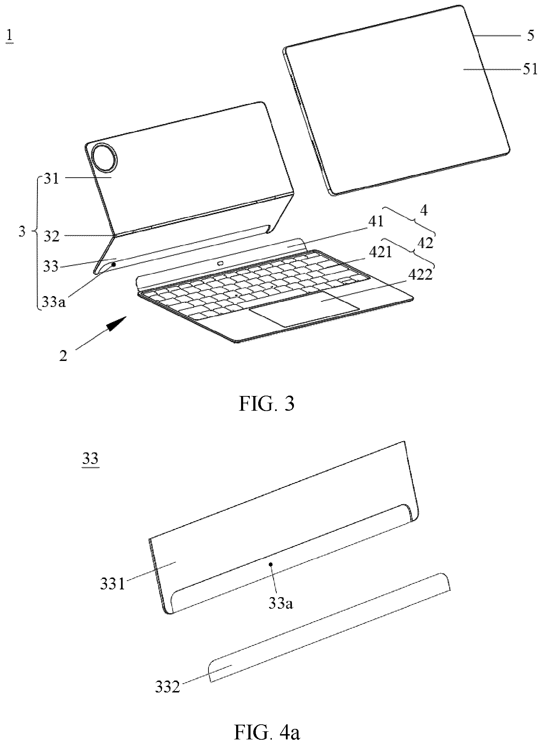

As shown in FIG. 3 and FIG. 4a, the second support part 33 may include a body 331, and the body 331 may be approximately in a flat shape.

As shown in FIG. 3 and FIG. 4a, an accommodation groove 33a may be provided at an edge location of the body 331. The accommodation groove 33a is configured to accommodate a connection part 41 when the second support part 33 is attached to the connection part 41 in the keyboard part 4 (which is further described below).

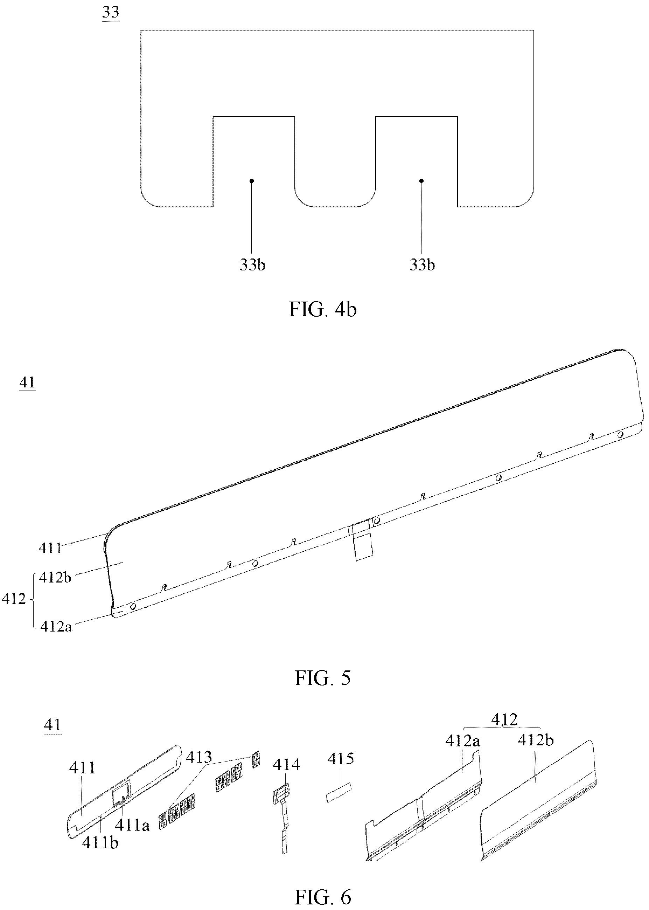

As shown in FIG. 4a, the second support part 33 may further include a shielding part 332. The shielding part 332 may be approximately in a smooth-sheet shape, and the shielding part 332 may be, for example, made of a mylar (mylar) material. The shielding part 332 may be mounted in the accommodation groove 33a, the shielding part 332 may be close to the bottom wall of the accommodation groove 33a, and the shielding part 332 occupies only a part of space that is of the accommodation groove 33a and that is close to the bottom wall. Poor aesthetic effects such as a texture and a color difference that are formed during processing may remain on an inner wall of the accommodation groove 33a, and the shielding part 332 may cover these poor aesthetic effects to play a decorative role. In some implementations, the shielding part 332 may be made of a material like stainless iron, and the shielding part 332 may be magnetic, so that the second support part 33 magnetically attracts the connection part 41 in the keyboard part 4. In some embodiments, a magnetic force between the shielding part 332 and the connection part 41 is less than a magnetic force between the connection part 41 and the electronic device 5 (which is further described below). It may be understood that the design in which the shielding part 332 is magnetic is not necessary. In another embodiment, the shielding part 332 may be removed, or the shielding part 332 and the accommodation groove 33a may be removed. FIG. 4b shows the second support part 33 in another embodiment. The shielding part 332 and the accommodation groove 33a are removed from the second support part 33. A notch 33b that runs through the second support part 33 in a thickness direction may be provided in the second support part 33. There may be at least one notch 33b. For example, two notches are shown in FIG. 4b.

As shown in FIG. 1 and FIG. 2, the second support part 33 may rotate by a specific angle relative to the first support part 31, and may be supported on a platform (for example, a table surface), so that the support component 3 is in a supporting state. In this case, the rear side 5a of the electronic device 5 may be placed on the first support part 31, and the second support part 33 and the rear side 5a may form an included angle a, so that the support component 3 positions and supports the electronic device 5. Because the second support part 33 may continuously rotate, the included angle a may continuously change. A value of the included angle a is not limited in embodiments of this application.

As shown in FIG. 3, the keyboard part 4 may include the connection part 41 and a keyboard assembly 42, and the connection part 41 may be fastened to an edge of the keyboard assembly 42.

As shown in FIG. 3, the keyboard assembly 42 may include a keyboard 421 and a touchpad 422, and the connection part 41, the keyboard 421, and the touchpad 422 may be sequentially connected. The keyboard 421 may include a plurality of keys, and the touchpad 422 is configured for the user to perform touch input. The keyboard assembly 42 may further include a built-in battery and wireless communication module. The battery may store electric energy and supply power to the wireless communication module. The wireless communication module is configured to perform wireless communication with the electronic device 5, to input an operation performed by the user on the keyboard assembly 42 into the electronic device 5. The wireless communication module includes but is not limited to a Bluetooth module, a Wi-Fi module, an infrared (infrared, IR) module, and the like.

As shown in FIG. 1 and FIG. 3, the connection part 41 is configured to magnetically attract the rear side 5a of the electronic device 5, and implement a circuit connection between the keyboard assembly 42 and the electronic device 5 (which is further described below). When the second support part 33 rotates to be attached to the rear side 5a of the electronic device 5, the connection part 41 may be accommodated in the accommodation groove 33a of the second support part 33. In this way, the support component 3 can be flattened, and a thickness of the protective case accessory 2 at the connection part 41 is small, helping improve user experience.

As shown in FIG. 5 and FIG. 6, the connection part 41 may include a base 411, several magnets 413, a first wireless coil 414, a cover plate 415, and a cover part 412. The following provides descriptions one by one.

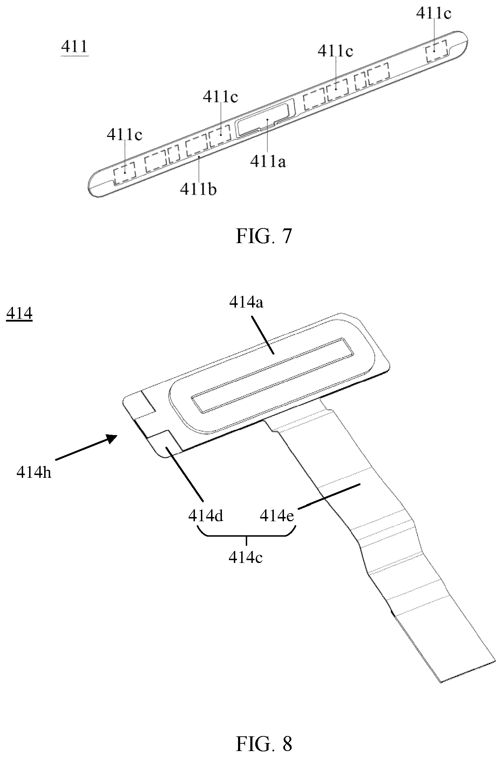

As shown in FIG. 7, the base 411 may be approximately of a long-strip panel-shaped structure. A part of a surface of the base 411 may be recessed to form a first accommodation groove 411a and a second accommodation groove 411b. The first accommodation groove 411a may be a rectangular step groove, and the second accommodation groove 411b may be a slender special-shaped groove. Several cavities 411c may be further formed inside the base 411, and each cavity 411c may accommodate at least one magnet 413. It may be understood that the foregoing structure of the base 411 is merely an example, and is not a limitation on embodiments of this application. For example, the first accommodation groove 411a and/or the second accommodation groove 411b may not be disposed. The cavity 411c may not be formed inside the base 411, but a part of the surface of the base 411 is recessed to form a groove to accommodate the magnet 413, or a wall is convexly disposed on the surface of the base 411 to fasten the magnet 413.

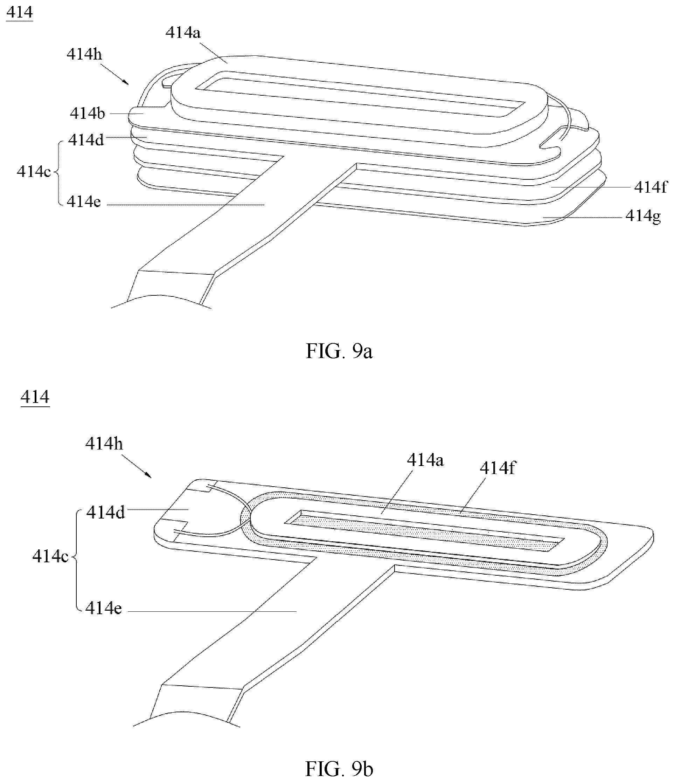

FIG. 8 is a diagram of an assembly structure of the first wireless coil 414. FIG. 9a is a diagram of an exploded structure of the first wireless coil 414 in FIG. 8. As shown in FIG. 8 and FIG. 9a, the first wireless coil 414 may include a conductor coil 414a, a first adhesive layer 414b, a first flexible printed circuit board 414c, a nanocrystalline layer 414f, and a second adhesive layer 414g.

As shown in FIG. 9a, the first flexible printed circuit board 414c may include a first part 414d and a second part 414e that are connected to each other, and the first part 414d and the second part 414e may approximately form a T-shaped structure. An outer layer of the first flexible printed circuit board 414c may be a flexible material, for example, polyurethane (polyurethane, PU) or non-woven fabric.

As shown in FIG. 9a, the conductor coil 414a, the first adhesive layer 414b, the first part 414d, the nanocrystalline layer 414f, and the second adhesive layer 414g may be sequentially stacked. The first adhesive layer 414b is bonded to the conductor coil 414a and the first part 414d, and one side of the second adhesive layer 414g is bonded to the nanocrystalline layer 414f. With reference to FIG. 9a and FIG. 6, the other side of the second adhesive layer 414g may be bonded to an inner wall of the first accommodation groove 411a of the base 411 (which is further described below). A stacking structure including the conductor coil 414a, the first adhesive layer 414b, the first part 414d, the nanocrystalline layer 414f, and the second adhesive layer 414g may be referred to as a head 414h. The second part 414e may be located outside the head 414h, and the second part 414e may be electrically connected to the keyboard assembly 42.

The conductor coil 414a is a coil formed by winding a conductor, and a number of turns of the conductor coil 414a may be determined based on a requirement. The conductor includes but is not limited to a copper wire. Two ends of the conductor in the conductor coil 414a may be electrically connected to the first part 414d. A bare wire diameter of the conductor coil 414a may be about 0.16 mm, and a finished diameter may be about 0.18 mm.

The nanocrystalline layer 414f is a layer including a nanocrystalline material, and the nanocrystalline material includes but is not limited to ferrite. For example, the nanocrystalline layer 414f may include several layers of nanocrystalline materials and several layers of double-sided adhesives, where the nanocrystalline materials and the double-sided adhesives may be alternately stacked. Two opposite outer sides of the nanocrystalline layer 414f may be single-sided adhesives, and the single-sided adhesives on the two outer sides may implement bonding of the nanocrystalline layer 414f to the first part 414d and bonding of the nanocrystalline layer 414f to the second adhesive layer 414g respectively. For example, the nanocrystalline layer 414f may have such a stacking structure: the single-sided adhesives, the double-sided adhesives, the nanocrystalline material, the double-sided adhesives, the nanocrystalline material, ..., the double-sided adhesives, and the single-sided adhesives, that are sequentially stacked. The nanocrystalline layer 414f is configured to concentrate energy on a side (for example, the upper side in FIG. 9a) of the conductor coil 414a for transmitting and receiving, and block transmitting and receiving of energy on an opposite side (for example, the lower side in FIG. 9a).

In this embodiment, when the connection part 41 magnetically attracts the rear side 5a of the electronic device 5, the first wireless coil 414 may be coupled to a wireless coil in the electronic device 5, so that the electronic device 5 may wirelessly charge the built-in battery in the keyboard assembly 42.

The following Table 2 shows specific composition of each layer of the first wireless coil 414 in FIG. 9a, and a stacking thickness of the head 414h of the first wireless coil 414. A thickness control value may be 0.63 mm±0.05 mm, a welding height may not exceed 0.36 mm, and a HotBar welding process may be used.

**Table 1: Stacking thickness of the head 414h of the first wireless coil 414**

| Thickness stacking unit: µm | | |
|---|---|---|
| Conductor coil 414a | | 360 |
| First adhesive layer 414b | | 30 |
| First flexible printed circuit board 414c | Cover film | 12.5 |
| | Electrolytic copper | 35 |
| | AD adhesives | 20 |
| | Substrate | 25 |
| | Double-sided adhesives | 30 |
| | Single-sided adhesives | 5 |
| | Double-sided adhesives | 3 |
| | Nanocrystalline | 20 |
| | Double-sided adhesives | 3 |
| Nanocrystalline layer 414f | Nanocrystalline | 20 |
| | Double-sided adhesives | 3 |
| | Nanocrystalline | 20 |
| | Double-sided adhesives | 3 |
| | Single-sided adhesives | 5 |
| Second adhesive layer 414g | | 30 |
| Total thickness | | 624.5 |

In this embodiment, the first wireless coil 414 is thickness at the head 414h. However, as shown in Table 1, a thickness of the head 414h is only about 0.6 mm. Therefore, the first wireless coil 414 is very thin, which helps reduce a thickness of the connection part 41.

The foregoing structure of the first wireless coil 414 is merely an example, and is not a limitation on embodiments of this application.

Different from those in the first wireless coil 414 shown in FIG. 9a, in another implementation, as shown in FIG. 9b, the conductor coil 414a and the nanocrystalline layer 414f may be disposed on a same side of the first part 414d of the first flexible printed circuit board 414c, and the conductor coil 414a, the nanocrystalline layer 414f, and the first part 414d may be sequentially stacked. It may be understood that FIG. 9b shows only key structures such as the conductor coil 414a, the nanocrystalline layer 414f, and the first flexible printed circuit board 414c. Actually, the first wireless coil 414 may further include another stacking layer like an adhesive layer. For convenience, the following continues to use the first wireless coil 414 shown in FIG. 9a as an example for description. It may be understood that the following descriptions are also applicable to FIG. 9b.

In another implementation, the first wireless coil may not include the conductor coil formed by winding the conductor, but includes an FPC (flexible printed circuit, flexible printed circuit) board wireless coil. A maximum thickness of this type of first wireless coil is very small, for example, may be between 0.4 mm and 1.0 mm.

As shown in FIG. 6, the cover plate 415 may be in a sheet shape, and may be made of, for example, an insulation material like fiberglass.

As shown in FIG. 6, the cover part 412 may include a first cover part 412a and a second cover part 412b, both of which may be of a sheet-shaped structure and may be made of a flexible material. The flexible material includes but is not limited to polyurethane and non-woven fabric. Structures of the first cover part 412a and the second cover part 412b may be designed based on a requirement. This is not limited in this embodiment. In this embodiment, two cover parts are disposed: the first cover part 412a and the second cover part 412b. In another embodiment, one single cover part may be used to replace the first cover part 412a and the second cover part 412b.

The following describes an assembly structure of each component in the connection part 41.

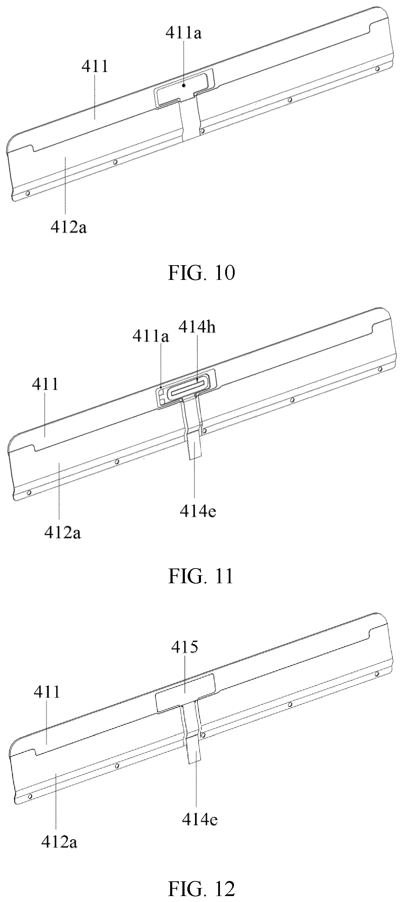

FIG. 10 shows an assembly structure of the first cover part 412a and the base 411. With reference to FIG. 10 and FIG. 6, the first cover part 412a may be mounted in the second accommodation groove 411b of the base 411. For example, one part of the first cover part 412a may be located in the second accommodation groove 411b, and the other part may be located outside the second accommodation groove 411b.

FIG. 11 shows that the first wireless coil 414 is mounted on the base 411 based on the assembly structure shown in FIG. 10. With reference to FIG. 11 and FIG. 9a, the head 414h of the first wireless coil 414 may be mounted in the first accommodation groove 411a of the base 411. The second adhesive layer 414g may be bonded to the bottom wall of the first accommodation groove 411a, and the conductor coil 414a may face the outside of the first accommodation groove 411a. The second part 414e of the first flexible printed circuit board 414c of the first wireless coil 414 may be located outside the first accommodation groove 411a and located on the first cover part 412a, that is, the first cover part 412a may be clamped between the base 411 and the second part 414e.

FIG. 12 shows that the cover plate 415 is mounted on the base 411 based on the assembly structure shown in FIG. 11. With reference to FIG. 12 and FIG. 11, the cover plate 415 may be mounted in the first accommodation groove 411a on the base 411, and seal an opening of the first accommodation groove 411a. The cover plate 415 may package the head 414h of the first wireless coil 414 in the first accommodation groove 411a, to fasten and protect the head 414h. It may be understood that, in another embodiment, the cover plate 415 may be removed.

With reference to FIG. 12 and FIG. 5, the second cover part 412b may cover the cover plate 415, the base 411, the first cover part 412a, and the second part 414e. Herein, covering refers to covering at least one part. For example, the second cover part 412b completely covers the cover plate 415 and the base 411, the second cover part 412b may cover at least a part of the first cover part 412a, the second cover part 412b may cover one part of the second part 414e of the first flexible printed circuit board 414c, and the other part of the second part 414e is located outside the second cover part 412b and is electrically connected to the keyboard assembly 42.

As described above, when the second support part 33 is rotated to be attached to the rear side 5a of the electronic device 5, the connection part 41 may be accommodated in the accommodation groove 33a of the second support part 33. With reference to FIG. 5 and FIG. 2, the base 411 of the connection part 41 may face the inside of the accommodation groove 33a, and the second cover part 412b of the connection part 41 may face the outside of the accommodation groove 33a. In this embodiment, a thickness of the second support part 33 may be stacked on the thickness of the connection part 41, to ensure that a thickness of the protective case accessory 2 at the connection part 41 is small. Table 2 may show a stacking thickness from the bottom wall of the accommodation groove 33a to the second cover part 412b. Because a thickness of a location at which the first accommodation groove 411a in the connection part 41 is located is large, and impact on the stacking thickness is large, Table 2 lists a thickness of a component or a part corresponding to the first accommodation groove 411a from the bottom wall of the accommodation groove 33a to the second cover part 412b.

**Table 2: Stacking thickness from the second support part 33 to the connection part 41**

| **Component or part** | **Thickness (mm)** |
|---|---|
| Bottom wall of the accommodation groove 33a | 0.5 |
| shielding part 332 | 0.15 |
| Bottom wall of the first accommodation groove 411a | 0.3 |
| Gap | 0.05 |
| Head 414h of the first wireless coil 414 | 0.6 |
| Adhesives for bonding the head 414h and the cover plate 415 | 0.05 |
| Cover plate 415 | 0.3 |
| Second cover part 412b | 0.25 |
| **Total** | **2.2** |

It can be learned from Table 2 that, after the foregoing thickness stacking, when the second support part 33 rotates to be attached to the rear side 5a of the electronic device 5 and the connection part 41 is accommodated in the accommodation groove 33a of the second support part 33, a total thickness from the second support part 33 to the connection part 41 is only 2.2 mm, so that a thickness at a circuit connection point between the protective case accessory 2 and the electronic device 5 is very small, and user experience can be improved.

The following describes a manner in which the protective case accessory 2 in this embodiment and the electronic device 5 are used together.

With reference to FIG. 1, the user may attach the first support part 31 to the rear side 5a of the electronic device 5, so that the first support part 31 magnetically attracts or is clamped with the electronic device 5, and rotate the second support part 33 by a specific angle to support the second support part 33 on the platform. The user may attach the rear side 5a of the electronic device 5 to the connection part 41, so that the rear side 5a magnetically attracts the connection part 41. In another implementation, the connection part 41 may be provided with a structural feature, or both the connection part 41 and the electronic device 5 may be provided with a structural feature. The structural feature includes but is not limited to a clamping jaw, or a combination of a clamping lock and a slot. The connection part 41 and the rear side 5a may form a detachable connection through the structural feature. In this embodiment, a detachable connection between the connection part 41 and the rear side 5a may be implemented through a magnet and/or a structural feature.

In this embodiment, when the rear side 5a of the electronic device 5 is detachably connected to the connection part 41, the electronic device 5 may be coupled to the connection part 41. Therefore, the electronic device 5 may be supported and positioned by the support component 3. When the battery in the keyboard assembly 42 needs to be charged, the electronic device 5 may wirelessly charge the battery through the first wireless coil 414 in the connection part 41. The keyboard assembly 42 may communicate with the electronic device 5 in a wireless manner. The wireless communication may be performed after the electronic device 5 is positioned on the protective case accessory 2, or may be performed in a state in which the electronic device 5 is separated from the protective case accessory 2. This is not limited in this embodiment.

With reference to FIG. 1 and FIG. 2, when the electronic device 5 is positioned on the protective case accessory 2, if the user wants to fold and close the protective case accessory 2, the user may flip the electronic device 5 towards the keyboard assembly 42, and the electronic device 5 drives the connection part 41 to bend. The user may flip the second support part 33 towards the electronic device 5, so that the second support part 33 is attached to the rear side 5a of the electronic device 5. In this case, the connection part 41 is accommodated in the accommodation groove 33a of the second support part 33, so that the support component 3 can be flattened, and a thickness of the protective case accessory 2 at the connection part 41 is small, thereby helping improve user experience. In an example, in this case, the magnet in the connection part 41 may magnetically attract the shielding part 332 in the second support part 33. In another implementation, a structural feature (including but not limited to a combination of a clamping lock and a slot, a velcro strap, and the like) may be disposed on the connection part 41 and/or the second support part 33, and the connection part 41 and the second support part 33 form a detachable connection through the structural feature. In this embodiment, a detachable connection between the connection part 41 and the second support part 33 may be implemented through a magnet and/or a structural feature.

When the protective case accessory 2 is folded and closed, the user may unfold the protective case accessory 2 again, and rotate the second support part 33 to form an included angle a with the electronic device 5, so that the support component 3 enters the supporting state. To avoid pulling the connection part 41 away from the electronic device 5 when the second support part 33 rotates, a magnetic force between the second support part 33 and the connection part 41 may be less than a magnetic force between the connection part 41 and the electronic device 5.

In addition to the foregoing use manners, with reference to FIG. 1, the user may also fold the first support part 31 to support the first support part 31 on the platform, so that the second support part 33 is attached to the rear side 5a of the electronic device 5, and the connection part 41 is accommodated in the accommodating groove 33a of the second support part 33. In this way, the protective case accessory 2 can also support the electronic device 5.

The solution in Embodiment 1 may be applied to a keyboard solution including a touchpad. In this embodiment, when the electronic device 5 is placed on the protective case accessory 2, the connection part 41 that is in a circuit connection to the electronic device 5 is located on the rear side 5a of the electronic device 5. In this rear side connection design, a thickness of the electronic device 5 does not need to be increased, thus helping implement lightness and thinness of the electronic device 5. By designing a specific structure of the connection part 41, a keyboard solution that has good adaptability to the electronic device 5, a mature structure, and good feasibility of mass production is provided, to enhance product competitiveness. The ultra-thin wireless coil is used, the accommodation groove 33a is disposed on the second support part 33, and thickness stacking of the second support part 33 and the connection part 41 is implemented, so that when the electronic device 5 is positioned on the protective case accessory 2 and the protective case accessory 2 is closed, a thickness at a circuit connection point between the protective case accessory 2 and the electronic device 5 can be greatly reduced (for example, may be reduced by at least 1 mm in comparison with a conventional solution), thereby improving user experience. When the electronic device 5 is placed on the protective case accessory 2 and the support component 3 is in the supporting state, the connection part 41 is hidden between the electronic device 5 and the second support part 33, and the connection part 41 is completely shielded by the electronic device 5 and the second support part 33, so that the user cannot see the connection part 41 from the front side of the electronic device 5 and a side on which the second support part 33 is located, thereby improving aesthetics and user experience. In addition, the support component 3 and the keyboard part 4 are separable, and this can meet a requirement of the user for using only the support component 3 or the keyboard part 4. The protective case accessory 2 has a small quantity of components, a simple structure, a light weight, and low costs.

The first wireless coil 414 is used in the connection part 41 in Embodiment 1, and the connection part 41 is coupled to the electronic device 5 through the first wireless coil 414. A difference is that a connector is used in the connection part in Embodiment 2 to replace the first wireless coil 414, and the connector may be in electrical contact with the electronic device 5, to implement electrical connection to the electronic device 5. Details are described below.

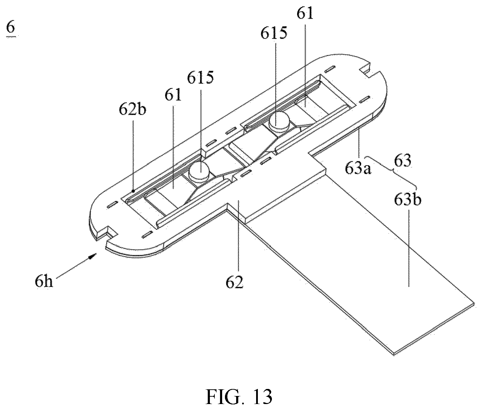

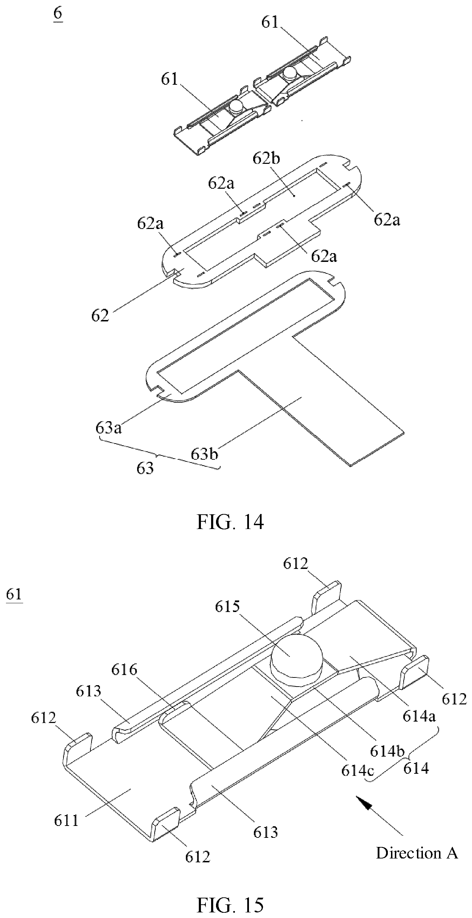

As shown in FIG. 13 and FIG. 14, in an implementation of Embodiment 2, the connection part may include a connector 6. The connector 6 may include a printed circuit board 62, a second flexible printed circuit board 63, and a spring plate 61.

As shown in FIG. 14, the printed circuit board 62 may be referred to as a "dip-type circuit board", the printed circuit board 62 may be hollowed out to form a mounting through hole 62b, and several connections through holes 62a may be disposed around the mounting through hole 62b.

As shown in FIG. 13 and FIG. 14, for example, two spring plates 61 may be disposed. The two spring plates 61 may be located in the mounting through hole 62b, and the two spring plates 61 may be, for example, disposed in a mirrored manner. In another embodiment, there may be at least two spring plates, for example, three spring plates.

FIG. 15 to FIG. 17 are each a diagram of a structure of the spring plate 61 in different angles of view. As shown in FIG. 15 to FIG. 17, the spring plate 61 may include a bottom plate 611. The bottom plate 611 may be roughly in a flat shape, and edges of the bottom plate 611 may be bent and connected to several weld legs 612. With reference to FIG. 15 and FIG. 14, one weld leg 612 may be welded in one connection through hole 62a. Limiting side walls 613 may be convexly disposed on both sides of the bottom plate 611, the limiting side walls 613 may have a bending shape, and the limiting side walls 613 on the two sides and the bottom plate 611 may roughly form a C-shaped structure.

As shown in FIG. 15 to FIG. 17, the spring plate 61 may further include an elastic arm 614, and the elastic arm 614 is connected to the bottom plate 611 to form a bent structure. The elastic arm 614 may include an elastic part 614a, a contact part 614b, and an elastic part 614c that are sequentially connected. The elastic part 614a may be bent and connected to the bottom plate 611, the elastic part 614a and the elastic part 614c may be approximately symmetrically distributed on two opposite sides of the contact part 614b, both the elastic part 614a and the elastic part 614c may be inclined to the bottom plate 611, and the contact part 614b may be approximately parallel to the bottom plate 611. There is a gap between the elastic part 614a, the contact part 614b, and the elastic part 614c and the bottom plate 611, and the gap facilitates elastic deformation of the elastic arm 614 downward. The spring plate 61 in this embodiment has two elastic regions: the elastic part 614a and the elastic part 614c, which can provide a large elastic force.

As shown in FIG. 15 to FIG. 17, the spring plate 61 may further include a contact 615, and the contact 615 may be connected to a side that is of the contact part 614b and that is opposite to the bottom plate 611. A metal plating layer may be added on the contact 615 to resist corrosion and oxidation. For example, the contact 615 may be gold-plated, platinum-plated, nickel-plated, or silver-plated.

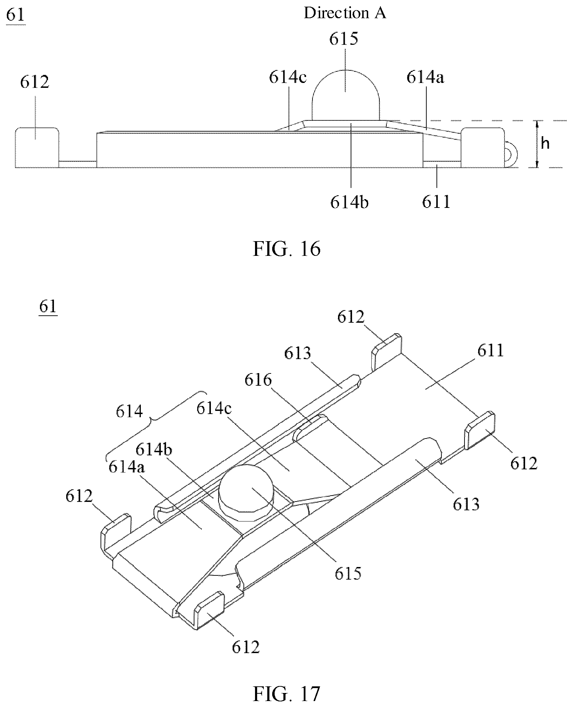

As shown in FIG. 15 and FIG. 17, the spring plate 61 may further include a limiting part 616, and the limiting part 616 may be connected to a side that is of the elastic part 614c and that is opposite to the elastic part 614a. The limiting part 616 may be located between the two limiting side walls 613, and two opposite sides of the limiting part 616 may be bent and respectively maintain a specific gap or may be in contact with inner surfaces of the two limiting side walls 613. A flat part of the limiting part 616 may maintain a specific gap or may be in contact with the bottom plate 611. Therefore, the limiting part 616 is limited by the two limiting side walls 613 and the bottom plate 611, and the limiting part 616 basically can move only in a length direction of the limiting side walls 613, and cannot move in another direction.

In this implementation, the spring plate 61 may be considered as a pogo pin. As shown in FIG. 16, a distance from a surface that is of the contact part 614b and that is connected to the contact 615 to a surface that is of the bottom plate 611 and that is opposite to the contact part 614b may be defined as h. When the spring plate 61 is in an unpressed free state, h is a free height of the spring plate 61, and the free height may be, for example, 0.6 mm to 1.5 mm. When the contact 615 is pressed, the contact 615 moves downward, and a downward stroke (or referred to as a stroke of the spring plate 61) of the contact 615 may be, for example, 0 mm to 0.5 mm. After the stroke is completed, h is a working height of the spring plate 61, and the working height may be, for example, 0.1 mm to 1.5 mm. For example, the working height may be 0.8 mm. In comparison with a conventional pogo pin whose working height reaches 1.6 mm, the spring plate 61 in this embodiment has a small working height, thus helping thin the spring plate 61 and the entire connection part.

A material of the spring plate 61 in this implementation may be a copper base material, a large current of more than 4 A may flow in the spring plate 61, and the spring plate 61 may have a service life of more than 20,000 times.

An outer layer of the second flexible printed circuit board 63 may be a flexible material, for example, polyurethane or non-woven fabric. As shown in FIG. 13 and FIG. 14, the second flexible printed circuit board 63 may include a third part 63a and a fourth part 63b that are connected. The third part 63a is electrically connected to the printed circuit board 62. The third part 63a, the printed circuit board 62, and the spring plate 61 mounted on the printed circuit board 62 may form a head 6h of the connector 6, and the fourth part 63b may be located outside the head 6h. The fourth part 63b may be electrically connected to the keyboard assembly.

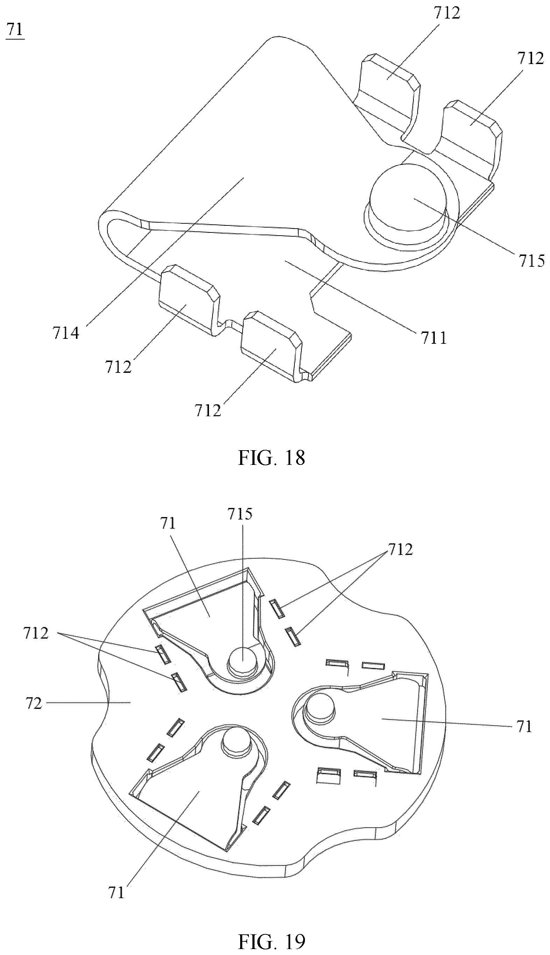

As shown in FIG. 18, in another implementation of Embodiment 2, a spring plate 71 of the connector may include a bottom plate 711, a weld leg 712, an elastic arm 714, and a contact 715. Different from the foregoing implementation, the elastic arm 714 of the spring plate 71 has one elastic region, and may provide a small elastic force, for example, an elastic force of 100 g.

FIG. 19 is a diagram of an assembly structure of the spring plate 71 and a printed circuit board 72, where the weld leg 712 of the spring plate 71 may be welded into a connection through hole of the printed circuit board 72. For example, the connector may have three spring plates 71, and therefore may have three contacts 715.

In Embodiment 2, the connector may include at least two spring plates and have at least two contacts.

The following uses the connector 6 in Embodiment 2 as an example to describe an assembly structure of the connector and another component in the connection part in Embodiment 2. It may be understood that the following description is applicable to any connector in Embodiment 2.

In Embodiment 2, with reference to FIG. 13 and FIG. 6, the head 6h of the connector 6 may be mounted in the first accommodation groove 411a of the base 411, and the contact 615 may face the outside of the first accommodation groove 411a. Correspondingly, the cover plate 415 and the second cover part 412b may have holes, so that the contact 615 passes through the holes and is exposed.

In Embodiment 2, when the rear side 5a of the electronic device 5 is attached to the connection part, a contact plate disposed on the rear side 5a is in electrical contact with the contact 615, so that the connection part is electrically connected to the electronic device 5. The connector in Embodiment 2 may be configured to transmit a signal, and may also be configured to transmit electric energy. A built-in battery or wireless communication module may not need to be disposed in the keyboard assembly in Embodiment 2. When the connection part is electrically connected to the electronic device 5, the electronic device 5 may supply power to the keyboard assembly, so that the keyboard assembly communicates with the electronic device 5 in a wired manner. Alternatively, a built-in battery and wireless communication module may be disposed in the keyboard assembly in Embodiment 2. When the connection part is electrically connected to the electronic device 5, the electronic device 5 may charge the battery in the keyboard assembly, and the battery may supply power to the wireless communication module. Wireless communication between the keyboard assembly and the electronic device 5 may be implemented through the wireless communication module.

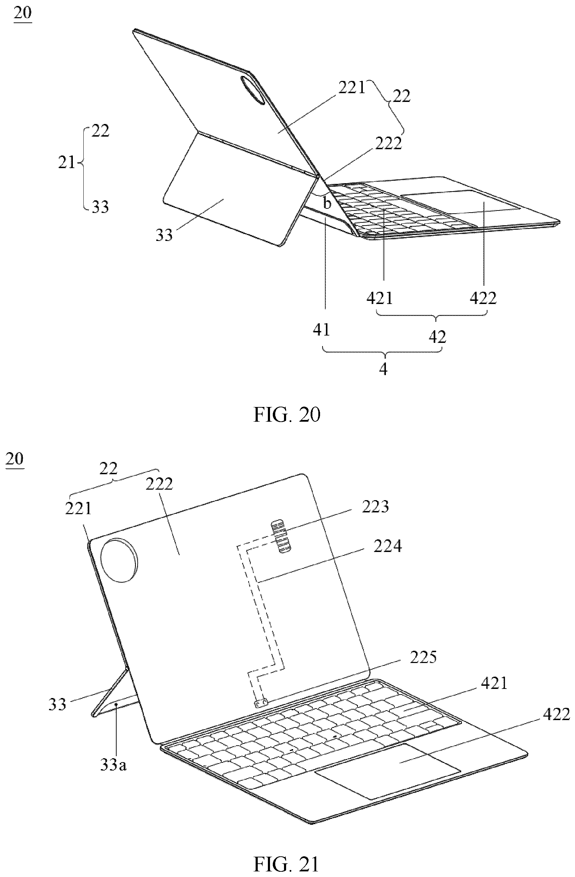

FIG. 20 to FIG. 22 show a structure of a protective case accessory 20 according to Embodiment 3. As shown in FIG. 20 to FIG. 23, same as the foregoing embodiments, the protective case accessory 20 may include a support component 21 and a keyboard part 4. The support component 21 may include a first support part 22 and a second support part 33, and the first support part 22 is articulated to the second support part 33. The keyboard part 4 may include a keyboard assembly 42 and a connection part 41. The keyboard assembly 42 may include a keyboard 421 and a touchpad 422 that are connected. The connection part 41, the keyboard 421, and the touchpad 422 are sequentially connected. For example, the connection part 41 may include a connector.

Different from the foregoing embodiments, as shown in FIG. 20 to FIG. 22, the first support part 22 in Embodiment 3 may include a first subpart 221 and a second subpart 222. The first subpart 221 and the second subpart 222 may be in a plate shape, and the first subpart 221 and the second subpart 222 may be disposed in a stacked manner. An area of the first subpart 221 may be less than an area of the second subpart 222. The first subpart 221 may cover an upper region of the second subpart 222, and a lower region of the second subpart 222 may exceed an edge of the first subpart 221. The first subpart 221 and the second subpart 222 may be fastened, for example, may be bonded.

The second subpart 222 may be magnetic, for example, a built-in magnet may be disposed in the second subpart 222; and/or a clamping structure, for example, a clamping lock or a clamping jaw, may be disposed on an edge of the second subpart 222.

As shown in FIG. 20, the second support part 33 is specifically articulated to the first subpart 221, and the second support part 33 and the first subpart 221 are located on a same side of the second subpart 222. When the second support part 33 rotates to be parallel to the first subpart 221, the second support part 33 may basically cover the lower region of the second subpart 222.

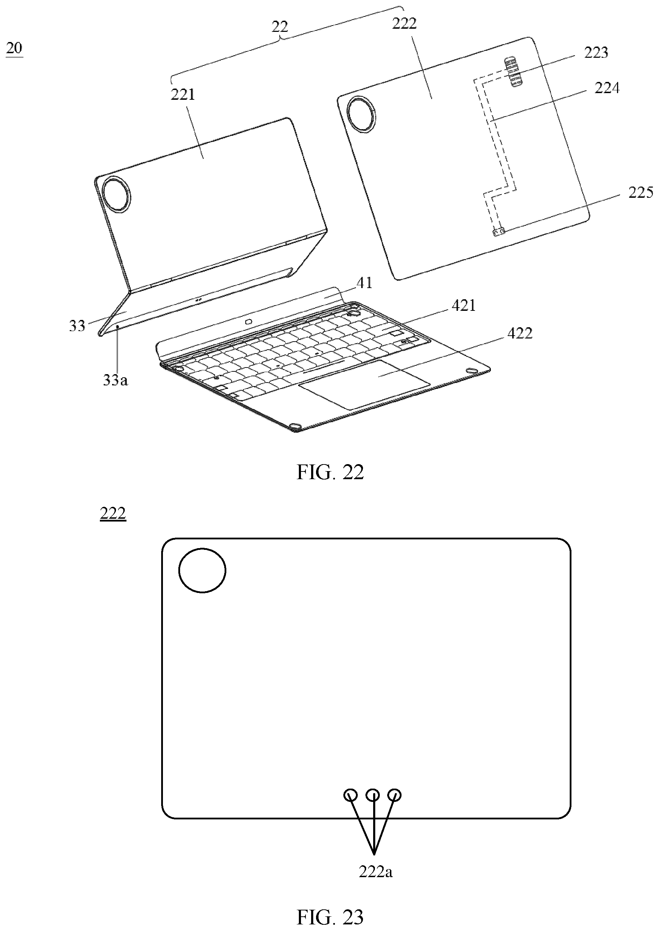

As shown in FIG. 21 and FIG. 22, the first support part 22 in Embodiment 3 may further include a connection structure 223 (which may be referred to as a third connection structure 223), a transmission part 224 (which may be referred to as a second transmission part 224), and a connection structure 225 (which may be referred to as a fourth connection structure 225). The connection structure 223, the transmission part 224, and the connection structure 225 are all disposed on the second subpart 222, and the transmission part 224 is connected between the connection structure 223 and the connection structure 225.

For example, the connection structure 223 may be a wireless coil (in this case, the connection structure 223 may be referred to as a second wireless coil). The wireless coil is configured to be coupled to the electronic device, so that the electronic device wirelessly charges a battery in the keyboard assembly 42 (which is further described below). The wireless coil may be the first wireless coil 414, or may be any other suitable wireless coil. This is not limited in this embodiment. In another implementation, the connection structure 223 may alternatively be a connector, where the connector is configured to be in electrical contact with the electronic device, so that the electronic device charges a battery in the keyboard assembly 42; or the electronic device 5 supplies power to the keyboard assembly, so that the keyboard assembly communicates with the electronic device 5 in a wired manner (which is further described below). The connector may be the connector (for example, the connector 6) in the foregoing embodiments, or may be any other suitable connector. This is not limited in this embodiment. For example, when the connection structure 223 is a wireless coil, the connection structure 223 may be embedded in the second subpart 222; or when the connection structure 223 is a connector, a majority of the connection structure 223 may be hidden in the second subpart 222, and a contact of the connection structure 223 may be exposed outside a surface of the second subpart 222.

For example, the transmission part 224 may be an FPC or a cable (cable), and the transmission part 224 conducts the connection structure 223 and the connection structure 225. For example, the transmission part 224 may be embedded in the second subpart 222.

For example, the connection structure 225 may be a conductive contact point, for example, a contact point made of a material like copper. The conductive contact point is configured to be in electrical contact with the connector in the connection part 41. In another implementation, the connection structure 225 may be any component that can implement a circuit connection, including but not limited to a connector (in electrical contact with the connector in the connection part 41), a wireless coil (in this implementation, the connection part 41 includes the first wireless coil 414, and the connection structure 225 is coupled to the first wireless coil 414), and the like. For example, when the connection structure 225 is a conductive contact point, the connection structure 225 may be exposed outside the second subpart 222; or when the connection structure 225 is a connector, a majority of the connection structure 225 may be hidden inside the second subpart 222, and a contact of the connection structure 225 may be exposed outside a surface of the second subpart 222; or when the connection structure 225 is a wireless coil, the connection structure 225 may be embedded inside the second subpart 222.

The following describes a manner in which the protective case accessory 20 in this embodiment and the electronic device are used together.

With reference to FIG. 20 to FIG. 22, a user may rotate the second support part 33 by a specific angle to support the second support part 33 on a platform. In this case, an included angle b is formed between the second support part 33 and the second subpart 222. For example, the user may implement magnetic attraction between the second subpart 222 and the connection part 41. In another implementation, a structural feature (including but not limited to a combination of a clamping lock and a slot, a velcro strap, and the like) may be disposed on the connection part 41 and/or the second subpart 222, and the connection part 41 and the second subpart 222 form a detachable connection through the structural feature. In this embodiment, the detachable connection between the connection part 41 and the second subpart 222 may be implemented through a magnet and/or a structural feature.

When the second subpart 222 is detachably connected to the connection part 41, the connection part 41 is located between the second subpart 222 and the second support part 33, and the connection part 41 is in electrical contact with or coupled to the connection structure 225. Then, the user may place the rear side of the electronic device on the second subpart 222, and the second subpart 222 may magnetically attract and/or may be clamped with the electronic device. In this way, the electronic device may be supported and positioned on the protective case accessory 20, and establish a circuit connection to the keyboard assembly 42.

If a built-in battery and wireless communication module are disposed in the keyboard assembly 42, the battery may supply power to the wireless communication module. In this case, the electronic device and the connection structure 223 are in a coupling connection or an electrical contact, and the connection structure 225 and the connection part 41 may be in an electrical contact or a coupling connection. When the battery needs to be charged, electric energy output by the electronic device may be stored in the battery through the connection structure 223, the transmission part 224, the connection structure 225, and the connection part 41. The keyboard assembly 42 may communicate with the electronic device 5 in a wireless manner through the wireless communication module. The wireless communication may be performed after the electronic device is positioned on the protective case accessory 20, or may be performed in a state in which the electronic device 5 is separated from the protective case accessory 20. This is not limited in this embodiment.

If the keyboard assembly 42 does not have a battery or a wireless communication module, the electronic device is in electrical contact with the connection structure 223, and the connection structure 225 is in electrical contact with the connection part 41. Through the connection structure 223, the transmission part 224, the connection structure 225, and the connection part 41, the electronic device may supply power to the keyboard assembly 42, and the keyboard assembly 42 may communicate with the electronic device.

The solution of Embodiment 3 also has technical effects of the foregoing embodiments. For example, a rear side connection design is used, and this facilitates lightness and thinness of the electronic device; a keyboard solution that has good adaptability to the electronic device, a mature structure, and good feasibility of mass production is provided, to enhance product competitiveness; a thickness at a circuit connection point between the protective case accessory 20 and the electronic device can be greatly reduced, thus improving user experience; the connection part 41 is completely shielded by the second subpart 222 and the second support part 33, thereby improving aesthetics and user experience; and the support component 21 and the keyboard part 4 are separable, and this can meet a requirement of the user for using only the support component 21 or the keyboard part 4. In addition, the first support part 22 includes the second subpart 222, so that a not high product requirement for the thickness of the electronic device and a thickness of the support component can be met. In addition, the first support part 22 has better strength and rigidity, and supports the electronic device more stably and reliably.

Different from Embodiment 3, in another embodiment, with reference to FIG. 20, the connection structure 223, the transmission part 224, and the connection structure 225 may not be disposed on the second subpart 222, and the second subpart 222 is only used as a mechanical part for supporting the electronic device, and does not have a circuit connection function. In this embodiment, the connection part 41 may include the first wireless coil 414, and the first wireless coil 414 may be coupled to a wireless coil in the electronic device through the second subpart 222. Alternatively, the connection part 41 may include a connector. As shown in FIG. 23, a through hole 222a may be disposed at a corresponding location of the second subpart 222, and a contact in the connector may penetrate through the through hole 222a and be in electrical contact with a contact plate on the rear side of the electronic device.

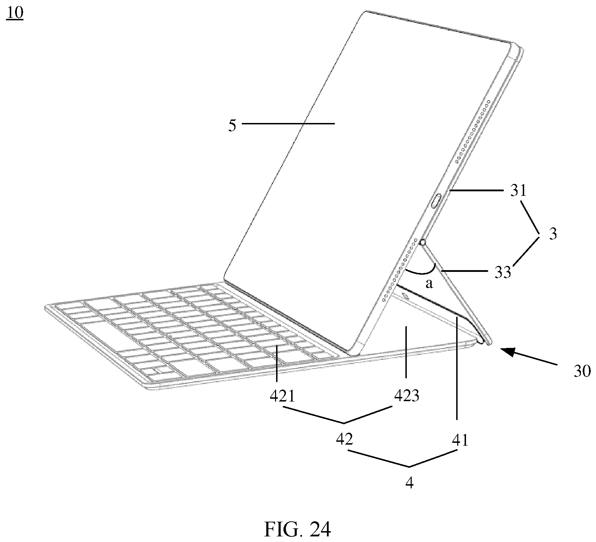

FIG. 24 is a diagram of a structure of an electronic apparatus 10 according to Embodiment 4. A support component 3 of a protective case accessory 30 is in a supporting state, and an electronic device 5 is placed on the protective case accessory 30. Different from Embodiment 1, the keyboard assembly 42 in Embodiment 4 does not have a touchpad, but includes a keyboard 421 and a keyboard connection region 423, and a connection part 41, the keyboard connection region 423, and the keyboard 421 are sequentially connected. In addition, a second support part 33 is detachably connected to the connection part 41, for example, magnetic attraction through a magnet, bonding through a velcro strap, and/or clamping through a structural feature. The connection part 41 may fall within an included angle a formed between the electronic device 5 and the second support part 33. With reference to FIG. 24 and FIG. 6, when the connection part 41 includes a connector, a contact of the connector may face the inside of the first accommodation groove 411a, penetrate through a through hole on a bottom wall of the first accommodation groove 411a, and face the second support part 33. A line structure is disposed in a first support part 31 and the second support part 33. The electronic device 5 may establish a circuit connection to the connection part 41 through the line structure in the first support part 31 and the second support part 33. The following provides descriptions.

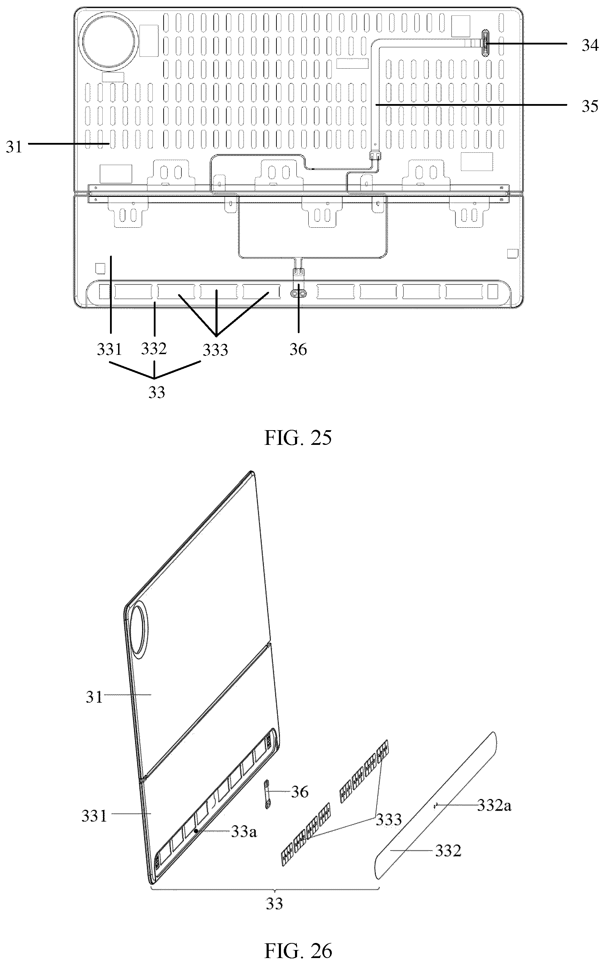

FIG. 25 may show a structure of the first support part 31 and the second support part 33 when the first support part 31 and the second support part 33 are flattened. As shown in FIG. 25, the protective case accessory 30 may further include a connection structure 34 (which may be referred to as a first connection structure 34), a transmission part 35 (which may be referred to as a first transmission part 35), and a connection structure 36 (which may be referred to as a second connection structure 36), and the transmission part 35 is connected between the connection structure 34 and the connection structure 36. The connection structure 34 may be disposed on the first support part 31, and the connection structure 36 may be disposed on the second support part 33. One part of the transmission part 35 is disposed on the first support part 31, and the other part is disposed on the second support part 33.

For example, the connection structure 34 may be a wireless coil (in this case, the connection structure 34 may be referred to as a third wireless coil). The wireless coil is configured to be coupled to the electronic device, so that the electronic device wirelessly charges the battery in the keyboard assembly 42 (which is further described below). The wireless coil may be the first wireless coil 414, or may be any other suitable wireless coil. This is not limited in this embodiment. In another implementation, the connection structure 34 may alternatively be a connector. The connector is configured to be in electrical contact with the electronic device, so that the electronic device charges a battery in the keyboard assembly 42; or the electronic device 5 supplies power to the keyboard assembly 42, so that the keyboard assembly 42 communicates with the electronic device 5 in a wired manner (which is further described below). The connector may be the connector (for example, the connector 6) in the foregoing embodiments, or may be any other suitable connector. This is not limited in this embodiment. For example, when the connection structure 34 is a wireless coil, the connection structure 34 may be embedded in the first support part 31; or when the connection structure 34 is a connector, a majority of the connection structure 34 may be hidden in the first support part 31, and a contact of the connection structure 34 may be exposed outside a surface of the first support part 31.

For example, the transmission part 35 may be an FPC or a cable (cable), and the transmission part 35 conducts the connection structure 34 and the connection structure 36. For example, a part that is of the transmission part 35 and that is located on the first support part 31 may be embedded in the first support part 31, and a part that is of the transmission part 35 and that is located on the second support part 33 may be embedded in the second support part 33.

For example, the connection structure 36 may be a conductive contact point, for example, a contact point made of a material like copper. The conductive contact point is configured to be in electrical contact with a connector in the connection part 41. In another implementation, the connection structure 36 may be any component that can implement circuit connection, including but not limited to a connector (in electrical contact with the connector in the connection part 41), a wireless coil (the connection structure 36 is coupled to the first wireless coil 414 in the connection part 41), or the like. For example, when the connection structure 36 is a conductive contact point, the connection structure 36 may be exposed outside a surface of the second support part 33; or when the connection structure 36 is a connector, a majority of the connection structure 36 may be hidden in the second support part 33, and a contact of the connection structure 36 may be exposed outside a surface of the second support part 33; or when the connection structure 36 is a wireless coil, the connection structure 36 may be embedded in the second support part 33.

FIG. 26 may show an exploded structure of the second support part 33. As shown in FIG. 26, the second support part 33 may include a body 331, a magnet 333, and a shielding part 332. An accommodation groove 33a may be disposed at an edge location of the body 331, and the magnet 333 may be mounted in the accommodation groove 33a. At least a part of the connection structure 36 may be located in the accommodation groove 33a. The shielding part 332 is mounted in the accommodation groove 33a, and the magnet 333 and the connection structure 36 are packaged in the accommodation groove 33a. The shielding part 332 may be close to a bottom wall of the accommodation groove 33a, and the shielding part 332 occupies only a part of space that is of the accommodation groove 33a and that is close to the bottom wall. A through hole 332a may be provided on the shielding part 332 for the connection structure 36 to be exposed or penetrated.

The following describes a manner in which the protective case accessory 30 in this embodiment and the electronic device 5 are used together.

With reference to FIG. 24 and FIG. 25, when the electronic device 5 is positioned on the protective case accessory 30, the first support part 31 may magnetically attract and/or may be clamped with the electronic device 5. The wireless coil in the electronic device 5 may be coupled to the connection structure 34 (which is a wireless coil), or a contact plate on the rear side of the electronic device 5 may be in electrical contact with the connection structure 34 (which is a connector). The magnet 333 in the second support part 33 may magnetically attract a magnet in the connection part 41, or the second support part 33 and the connection part 41 may form a detachable connection through a structural feature. The connection structure 36 (which is a conductive contact point or a connector) may be in electrical contact with a contact of the connector in the connection part 41, or the connection structure 36 (which is a wireless coil) may be coupled to the first wireless coil 414 in the connection part 41. Therefore, the electronic device 5 may establish a circuit connection to the keyboard assembly 42 through the connection structure 34, the transmission part 35, the connection structure 36, and the connection part 41. In this embodiment, the electronic device 5 may wirelessly charge the keyboard assembly 42, and the keyboard assembly 42 may communicate with the electronic device 5 in a wireless manner; or the electronic device 5 may supply power to the keyboard assembly 42, and the keyboard assembly 42 may communicate with the electronic device 5 in a wired manner. Specific implementation is the same as that described above, and is not repeated herein.

The solution in Embodiment 4 may be applied to a keyboard solution without a touchpad. The solution in Embodiment 4 also has technical effects of the foregoing embodiments. For example, a rear side connection design is used, and this facilitates lightness and thinness of the electronic device 5; a keyboard solution that has good adaptability to the electronic device 5, a mature structure, and good feasibility of mass production is provided, to enhance product competitiveness; a thickness at a circuit connection point between the protective case accessory 30 and the electronic device 5 can be greatly reduced, thus improving user experience; the connection part 41 is completely shielded by the second support part 33 and the electronic device 5, thereby improving aesthetics and user experience; and the support component 3 and the keyboard part 4 are separable, and this can meet a requirement of the user for using only the support component 3 or the keyboard part 4. In addition, the protective case accessory 30 has a small quantity of components, a simple structure, a light weight, and low costs.

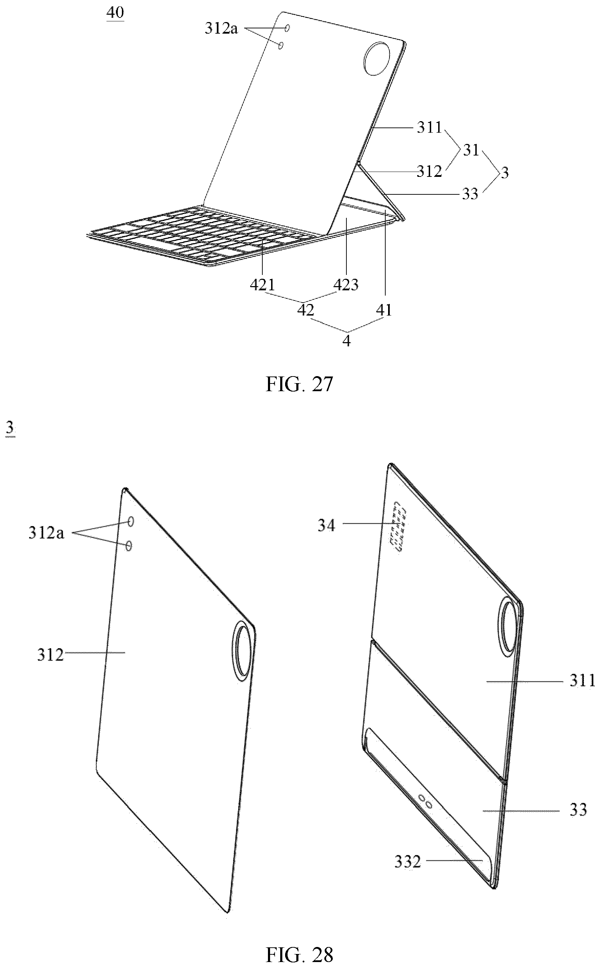

FIG. 27 and FIG. 28 show a protective case accessory 40 according to Embodiment 5. Different from Embodiment 4, the first support part 31 of the protective case accessory 40 may include a first subpart 311 and a second subpart 312, and the first subpart 311 and the second subpart 312 may be disposed in a stacked manner. An area of the first subpart 311 may be less than an area of the second subpart 312, the first subpart 311 may cover an upper region of the second subpart 312, and a lower region of the second subpart 312 may exceed an edge of the first subpart 311. The first subpart 311 and the second subpart 312 may be fastened, for example, may be bonded. The second support part 33 is articulated to the first subpart 311, and the second support part 33 and the first subpart 311 are located on a same side of the second subpart 312. When the second support part 33 rotates to be parallel to the first subpart 311, the second support part 33 may basically cover the lower region of the second subpart 312.

With reference to FIG. 27 and FIG. 28, the second subpart 312 may be used only as a mechanical part for supporting the electronic device, and there is no line structure. The connection structure 34 may be disposed on the first subpart 311, and a part of the second transmission part may be disposed on the first subpart 311. For example, the connection structure 34 may be a connector, and a through hole 312a may be disposed on the second subpart 312, so that a contact of the connection structure 34 is exposed. In another implementation, the connection structure 34 may be a wireless coil, and a through hole 312a may not need to be disposed on the second subpart 312. The second subpart 312 may be magnetic, for example, a built-in magnet may be disposed in the second subpart 312; and/or a clamping structure, for example, a clamping lock or a clamping jaw, may be disposed on an edge of the second subpart 312.

The following describes a manner in which the protective case accessory 40 in this embodiment and the electronic device are used together.

With reference to FIG. 27, when the electronic device is positioned on the protective case accessory 40, the first subpart 311 of the first support part 31 may magnetically attract or may be clamped with the electronic device. A contact plate on the rear side of the electronic device 5 may be in electrical contact with the connection structure 34 (which is a connector), or a wireless coil in the electronic device may be coupled to the connection structure 34 (which is a wireless coil). The second support part 33 may be detachably connected to the connection part 41 through magnetic attraction through a magnet and/or a structural feature. The connection structure 36 (which is a conductive contact point or a connector) may be in electrical contact with a connector in the connection part 41, or the connection structure 36 (which is a wireless coil) may be coupled to the first wireless coil in the connection part 41. Therefore, the electronic device may establish a circuit connection to the keyboard assembly 42 through the connection structure 34, the second transmission part, the connection structure 36, and the connection part 41. In this embodiment, the electronic device may wirelessly charge the keyboard assembly 42, and the keyboard assembly 42 may communicate with the electronic device in a wireless manner; or the electronic device may supply power to the keyboard assembly 42, and the keyboard assembly 42 may communicate with the electronic device in a wired manner. Specific implementation is the same as that described above, and is not repeated herein.

The solution of Embodiment 5 may be applied to a keyboard solution without a touchpad. The solution in Embodiment 5 also has technical effects of the foregoing embodiments. For example, a rear side connection design is used, and this facilitates lightness and thinness of the electronic device; a keyboard solution that has good adaptability to the electronic device, a mature structure, and good feasibility of mass production is provided, to enhance product competitiveness; a thickness at a circuit connection point between the protective case accessory 40 and the electronic device can be greatly reduced, thus improving user experience; the connection part 41 is completely shielded by the second support part 33 and the electronic device, thereby improving aesthetics and user experience; and the support component 3 and the keyboard part 4 are separable, and this can meet a requirement of the user for using only the support component 3 or the keyboard part 4. In addition, the first support part 31 includes the second subpart 312, so that a not high product requirement for the thickness of the electronic device and a thickness of the support component can be met. In addition, the first support part 31 has better strength and rigidity, and supports the electronic device more stably and reliably.

Different from Embodiment 5, in Embodiment 6, a part of the transmission part 35 and the connection structure 34 may be disposed on the second subpart 312, and there is no line structure on the first subpart 311. In this way, a circuit connection between the electronic device and the keyboard assembly 42 can also be established.

For example, in any embodiment of this application, one end of the connection part 41 and the keyboard assembly 42 may form a flexible connection, and the other end of the connection part 41 is a free end relative to the keyboard assembly 42. When the keyboard part 4 and the support component 3 are separated, the flexible connection enables the connection part 41 to bend and flip relative to the keyboard assembly 42. For example, the flexible connection may be implemented based on a material and a structure of the connection part 41. For example, when the connection part 41 is bent to the rear side of the keyboard assembly 42, the connection part 41 may be detachably connected to the rear side of the keyboard assembly 42, where the rear side is opposite to a side on which a key is disposed on the keyboard assembly 42, and the detachable connection includes but is not limited to magnetic attraction, bonding through a velcro strap, clamping, and the like. Alternatively, when the connection part 41 is bent to the rear side of the keyboard assembly 42, the connection part 41 is not connected to the rear side of the keyboard assembly 42, and is only in loose contact with the rear side of the keyboard assembly 42.

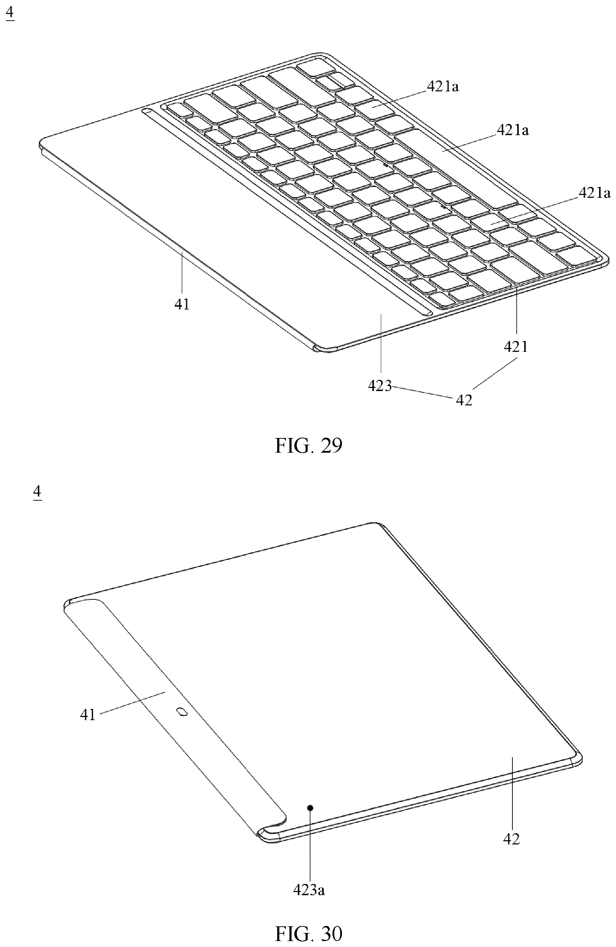

The protective case accessory 40 (the keyboard assembly 42 has no touchpad and has a keyboard connection region 423) in Embodiment 5 is used as an example. As shown in FIG. 29 and FIG. 30, the keyboard connection region 423 has a rear side 423a, and the rear side 423a is opposite to a side on which a key 421a is disposed on the keyboard assembly 42. The connection part 41 and the keyboard connection region 423 may form a flexible connection, and the connection part 41 may be bent to the rear side 423a, and is detachably connected to the rear side 423a.

It may be understood that, when the keyboard assembly 42 has a keyboard 421 and a touchpad, and does not have the keyboard connection region 423, for example, with reference to FIG. 3, the connection part 41 and the keyboard 421 may also form a flexible connection, and the connection part 41 may be bent to the rear side of the keyboard 421, and is detachably connected to the rear side of the keyboard 421.

In this implementation, when the keyboard part 4 and the support component 3 are separated, the connection part 41 is flipped to the rear side of the keyboard assembly 42 and is detachably connected to the keyboard assembly 42, so that the connection part 41 can be fastened to the rear side of the keyboard assembly 42, and the keyboard part 4 has a simple and regular appearance. When a user inputs on the keyboard assembly 42, the connection part 41 may further raise a tilt angle of the keyboard assembly 42, to facilitate user input and improve user experience. It may be understood that, if the connection part 41 is flipped to the rear side of the keyboard assembly 42 but is not connected to the keyboard assembly 42 but only in contact with the keyboard assembly 42, a similar effect may also be achieved.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A protective case accessory, configured to match an electronic device for use, wherein
the protective case accessory comprises a keyboard assembly, a connection part, a first support part, and a second support part;
the connection part is fastened to the keyboard assembly and electrically connected to the keyboard assembly;
the first support part is articulated to the second support part, and the second support part is configured to form a detachable connection to the connection part; and
when the electronic device is placed on the protective case accessory, the first support part is in contact with a rear side of the electronic device, the second support part rotates by a specific angle relative to the first support part and forms an included angle with the rear side of the electronic device, the connection part falls within the included angle, and the connection part and the electronic device form a circuit connection, wherein the rear side of the electronic device is opposite to a display of the electronic device.

2. The protective case accessory according to claim 1, wherein
a built-in battery and wireless communication module are disposed in the keyboard assembly, and the wireless communication module is configured to perform wireless communication with a wireless communication module in the electronic device; and
the connection part comprises a first wireless coil, and the first wireless coil is electrically connected to the battery; and when the electronic device is placed on the protective case accessory, the first wireless coil is coupled to a wireless coil in the electronic device, and the battery is configured to receive electric energy input by the electronic device.

3. The protective case accessory according to claim 2, wherein
the first wireless coil comprises a conductor coil, a first flexible printed circuit board, and a nanocrystalline layer, the first flexible printed circuit board comprises a first part and a second part, the first part is connected to the second part, the conductor coil, the nanocrystalline layer, and the first part are sequentially stacked, the conductor coil is electrically connected to the first part, and the second part is electrically connected to the keyboard assembly.

4. The protective case accessory according to claim 2 or 3, wherein
a thickness of the first wireless coil is 0.4 mm to 1.0 mm.

5. The protective case accessory according to claim 1, wherein
the connection part comprises a connector, and when the electronic device is placed on the protective case accessory, the connector and the electronic device form a circuit connection.

6. The protective case accessory according to claim 5, wherein
the connector comprises a printed circuit board, a second flexible printed circuit board, and a spring plate; the second flexible printed circuit board comprises a third part and a fourth part, the third part is connected to the fourth part, the third part is electrically connected to the printed circuit board, and the fourth part is electrically connected to the keyboard assembly; and the spring plate is welded to the printed circuit board, and the spring plate is configured to implement an electrical contact.

7. The protective case accessory according to claim 6, wherein
the spring plate comprises a bottom plate, an elastic arm, and a contact, the elastic arm and the bottom plate form a bent structure, there is a gap between the elastic arm and the bottom plate, the contact is connected to a side that is of the elastic arm and that is opposite to the bottom plate, and the contact is configured to implement an electrical contact.

8. The protective case accessory according to claim 7, wherein
when the spring plate is in a working state, a distance from a surface that is of the elastic arm and that is connected to the contact to a surface that is of the bottom plate and that is opposite to the elastic arm is 0.1 mm to 1.5 mm.

9. The protective case accessory according to claim 2, wherein
the connection part further comprises a base and a cover part, and the cover part is connected to the base; and
one part of the first wireless coil is located between the cover part and the base, and the other part of the first wireless coil is located outside the cover part and the base.

10. The protective case accessory according to claim 9, wherein
a conductor coil, a first part of a first flexible printed circuit board, and a nanocrystalline layer of the first wireless coil are located between the cover part and the base, one part of a second part of the first flexible printed circuit board is located between the cover part and the base, and the other part of the second part is located outside the cover part and the base.

11. The protective case accessory according to claim 10, wherein
the base is provided with a first accommodation groove; and
the conductor coil, the first part of the first flexible printed circuit board, and the nanocrystalline layer of the first wireless coil are accommodated in the first accommodation groove, and the second part of the first flexible printed circuit board is located outside the first accommodation groove.

12. The protective case accessory according to claim 11, wherein
the connection part further comprises a cover plate, and the cover plate seals the first accommodation groove and is located between the base and the cover part.

13. The protective case accessory according to any one of claims 10 to 12, wherein
the base is provided with a second accommodation groove; and the cover part comprises a first cover part and a second cover part, the first cover part is mounted in the second accommodation groove, and the second cover part covers the first cover part and the base; and
the conductor coil, the first part of the first flexible printed circuit board, and the nanocrystalline layer of the first wireless coil are located between the second cover part and the base, and a part of the second part of the first flexible printed circuit board is located between the second cover part and the first cover part.

14. The protective case accessory according to claim 5, wherein
the connection part further comprises a base and a cover part, and the cover part is connected to the base; and
one part of the connector is located between the cover part and the base, and the other part of the connector is located outside the cover part and the base.

15. The protective case accessory according to any one of claims 9 to 14, wherein
the connection part further comprises a magnet, and the magnet is located inside the base.

16. The protective case accessory according to any one of claims 1 to 15, wherein
the second support part is provided with an accommodation groove, and when the second support part is connected to the connection part, the connection part is accommodated in the accommodation groove.

17. The protective case accessory according to any one of claims 1 to 16, wherein
the second support part is magnetic.

18. The protective case accessory according to any one of claims 1 to 17, wherein
the keyboard assembly comprises a keyboard and a touchpad, and the connection part, the keyboard, and the touchpad are sequentially connected; and
when the electronic device is placed on the protective case accessory, the connection part is detachably connected to the rear side of the electronic device.

19. The protective case accessory according to claim 18, wherein
when the electronic device is placed on the protective case accessory, the connection part is in contact with the rear side of the electronic device.

20. The protective case accessory according to any one of claims 1 to 17, wherein
the keyboard assembly comprises a keyboard and a keyboard connection region, and the connection part, the keyboard connection region, and the keyboard are sequentially connected;
the protective case accessory further comprises a first connection structure, a transmission part, and a second connection structure, the first connection structure is disposed on the first support part, the second connection structure is disposed on the second support part, one part of the transmission part is disposed on the first support part and the other part is disposed on the second support part, and the transmission part is connected between the first connection structure and the second connection structure; and
when the electronic device is placed on the protective case accessory, the keyboard connection region is located between the electronic device and the second support part, the connection part is detachably connected to the second support part, the connection part and the second connection structure form a circuit connection, and the first connection structure and the electronic device form a circuit connection.

21. The protective case accessory according to any one of claims 1 to 20, wherein
the connection part and the keyboard assembly form a flexible connection; and when the connection part is separated from the second support part, the connection part is capable of being bent relative to the keyboard assembly, and is detachably connected to a rear side of the keyboard assembly, wherein the rear side of the keyboard assembly is opposite to a side that is of the keyboard assembly and on which a key is disposed.

22. An electronic apparatus, comprising:
an electronic device and the protective case accessory according to any one of claims 1 to 21, wherein the electronic device has a display and a rear side, the display is opposite to the rear side of the electronic device, the electronic device is configured to be placed on the protective case accessory, the first support part is configured to be in contact with the rear side of the electronic device, and the connection part is configured to form a circuit connection to the electronic device.
